# EUROPEAN PATENT SPECIFICATION

(11) **EP 3 451 641 B1**
(45) Date of publication and mention of the grant of the patent: **03.03.2021**
(21) Application number: 18192346.7
(22) Date of filing: 04.09.2018
(51) Int. Cl.: H04M 1/725, G06F 3/0488, G06F 1/16, G06F 3/041, G06F 3/0481, H04M 1/02

(54) **MOBILE COMMUNICATION DEVICE WITH SEPARATE DISPLAY AREAS AND REARRANGEMET OF ICONS IN THE EDGES AREAS.**
MOBILE KOMMUNIKATIONSVORRICHTUNG MIT GETRENNTEN ANZEIGEBEREICHEN UND NEUANORDNUNG VON SYMBOLEN IN DEN RANDBEREICHEN.
APPAREIL DE COMMUNICATION MOBILE AVEC DES ZONES D'AFFICHAGE SÉPARÉES ET RÉARRANGEMENT DES ICÔNES DANS LES ZONES DES BORDS.

(30) Priority: 05.09.2017 CN 201710791790
(43) Date of publication of application: 06.03.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Song, Dongguan, Guangdong 523860 (CN)
(74) Representative: Manitz Finsterwald Patent- und Rechtsanwaltspartnerschaft mbB

(56) References cited:
- EP-A1- 3 128 407
- US-A1- 2003 098 892
- US-A1- 2013 300 697

## Description

### Cross-Reference to Related Applications

This application claims priority to Chinese Patent Application No. 201710791790.3, filed September 5, 2017, entitled "Method and Device for Displaying Notification Message".

### Technical Field

The disclosure relates to the technical field of terminals, and particularly to a method and communication terminal for displaying a notification message, and a non-transitory computer-readable storage medium.

### Background

Along with development of a terminal technology, a load capacity of a terminal becomes increasingly high, and various applications may be installed on the terminal, for example, information interaction type applications like WeChat, short message service and telephone service and other applications like Taobao, Baidu and MicroBlog. In processes of running these applications, the terminal may usually receive notification messages of these applications, for example, a chat message from a friend of WeChat, an incoming call message of the telephone service, a delivery message for an order of Taobao and a hotspot pushing message of MicroBlog.

At present, when a notification message of any application is received, a terminal may display the notification message in a specified region on a screen, the specified region is a part of region of a terminal task interface, and the terminal task interface is a display interface, for execution of a present task, of the terminal, for example, a chat interface of WeChat.

In a process of implementing the disclosure, the inventor finds that a conventional art at least has the following problem.

In the art, when a notification message of any application is received, a terminal may display the notification message on a screen, so that a part of region of a terminal task interface may be covered and certain interference may be brought to a present task.

US2013300697A1, EP3128407A1, and US2003098892A1 provide respective technical solutions. US2013300697A1 discloses a portable terminal having a bended display divided into a main region of a front surface and a sub-region of a side of the portable terminal and operating functions of the portable terminal in connection with the main region and the sub-region, and a method of operating the same; It also discloses that when receiving the notifying message (for example, the short message), the received notifying message is displayed in the sub-region; It further discloses that according to the present invention, the user can directly confirm efficiently received information without interfering with a screen displayed on the main region. EP3128407A1 discloses a mobile terminal and a method for controlling the same, in which a controller of the mobile terminal extracts a least one first icon corresponding to an application, which will be displayed on a home screen, by using information on frequency of use of each of a plurality of applications stored in a memory, and the extracted at least one first icon is only displayed on the home screen; it also discloses a mobile terminal and a method for controlling the same, in which a controller of the mobile terminal displays at least one second icon corresponding to an application, of which frequency of use is low, on a home screen by using information on frequency of use of each of a plurality of applications stored in a memory after touching one point within the home screen and dragging the touched point in a specific direction. US2003098892A1 discloses an apparatus and method for presenting one or more auditory icons are provided to deliver contextual information in a timely manner to the user without requiring the user to view the mobile terminal's display. The mobile terminal receives a plurality of message from one or more message sources, prioritizes them according to one or more context values, and presents to the user auditory icons associated with the message in accordance with any number of pre-set preferences set by the user. However, the above mentioned problem still remains unsolved.

### Summary

It is an object of the invention to provide a method according to claim 1 and communication terminal according to claim 9 for displaying a notification message, and a non-transitory computer-readable storage medium according to claim 11.

This object is solved by the subject-matter of the independent claims.

According to the invention a method for displaying a notification message is provided, including: displaying application icons of multiple preset applications in an auxiliary display region of a communication terminal; when a notification message is acquired, determining a target application corresponding to the notification message; when the multiple preset applications comprise the target application, displaying the notification message and an operation option in the auxiliary display region, the auxiliary display region being a region which is different from a main display region of the communication terminal, the main display region being configured to display an interface of a present running task of the communication terminal.

According another aspect of the invention a communication terminal for displaying a notification message is provided, including: at least one processor; and a computer readable storage, coupled to the at least one processor, wherein at least one computer executable instruction are stored in the computer readable storage, and when the at least one computer executable instruction is executed by the at least one processor, cause the at least one processor to carry out following actions: displaying application icons of multiple preset applications in an auxiliary display region of the communication terminal; when a notification message is obtained, determining a target application corresponding to the notification message; and when the multiple preset applications comprise the target application, displaying the notification message and an operation option in the auxiliary display region, the auxiliary display region being a region which is different from a main display region, the main display region being configured to display an interface of a present running task of the communication terminal.

According to still another aspect of the invention a non-transitory computer-readable storage medium is provided, on which a computer program is stored, wherein the computer program is executed by a processor to carry out the actions of the method according to the invention, such as obtaining a notification message; and displaying the notification message and an operation option in an auxiliary display region of a communication terminal, the auxiliary display region being a region which is different from a main display region of the communication terminal, the main display region being configured to display an interface of a present running task of the communication terminal.

### Brief Description of the Drawings

In order to describe the technical solutions in the embodiments of the disclosure more clearly, the drawings required to be used in descriptions about the embodiments will be simply introduced below. Obviously, the drawings in the following descriptions are only some embodiments of the disclosure. Those of ordinary skilled in the art may further obtain other drawings according to these drawings without creative work.
Fig. 1 is a structure block diagram of a communication terminal 100 according to an embodiment of the disclosure;
Fig. 2 is a structure block diagram of a communication terminal 100 according to another embodiment of the disclosure;
Fig. 3A is a schematic diagram of a full screen according to an embodiment of the disclosure;
Fig. 3B is a schematic diagram of a curved screen according to an embodiment of the disclosure;
Fig. 3C is a schematic diagram of an irregularly-shaped screen according to an embodiment of the disclosure;
Fig. 3D is a schematic diagram of an irregularly-shaped screen according to another embodiment of the disclosure;
Fig. 3E is a schematic diagram of an irregularly-shaped screen according to another embodiment of the disclosure;
Fig. 3F is a schematic diagram of an irregularly-shaped screen according to another embodiment of the disclosure;
Fig. 4 is a schematic diagram of display regions of a communication terminal according to an embodiment of the disclosure;
Fig. 5 is a flowchart of a method for displaying a notification message according to an embodiment of the disclosure;
Fig. 6 is a flowchart of a notification message display method according to another embodiment of the disclosure;
Fig. 7 is a schematic diagram of application icons of multiple preset applications in an auxiliary display region according to an embodiment of the disclosure;
Fig. 8 is a schematic diagram of application icons of multiple preset applications in an auxiliary display region according to another embodiment of the disclosure;
Fig. 9 is a schematic diagram of displaying a notification message and an operation option according to an embodiment of the disclosure;
Fig. 10 is a schematic diagram of application icons of multiple preset applications in an auxiliary display region according to an embodiment of the disclosure;
Fig. 11 is a schematic diagram of displaying a notification message and an operation option according to an embodiment of the disclosure;
Fig. 12 is a schematic diagram of application icons of multiple preset applications in an auxiliary display region according to an embodiment of the disclosure;
Fig. 13 is a schematic diagram of application icons of multiple preset applications in an auxiliary display region according to another embodiment of the disclosure;
Fig. 14 is a schematic diagram of displaying a notification message and an operation option according to an embodiment of the disclosure;
Fig. 15 is a schematic diagram of displaying a notification message and an operation option according to another embodiment of the disclosure;
Fig. 16 is a schematic diagram of displaying a notification message and an operation option according to another embodiment of the disclosure;
Fig. 17 is a schematic diagram of displaying a notification message and an operation option according to another embodiment of the disclosure; and
Fig. 18 is a structure diagram of a device for displaying a notification message according to an embodiment of the disclosure.

### Detailed Description of the Embodiments

In order to make the purpose, technical solutions and advantages of the disclosure clearer, implementation modes of the disclosure will further be described below in combination with the drawings in detail.

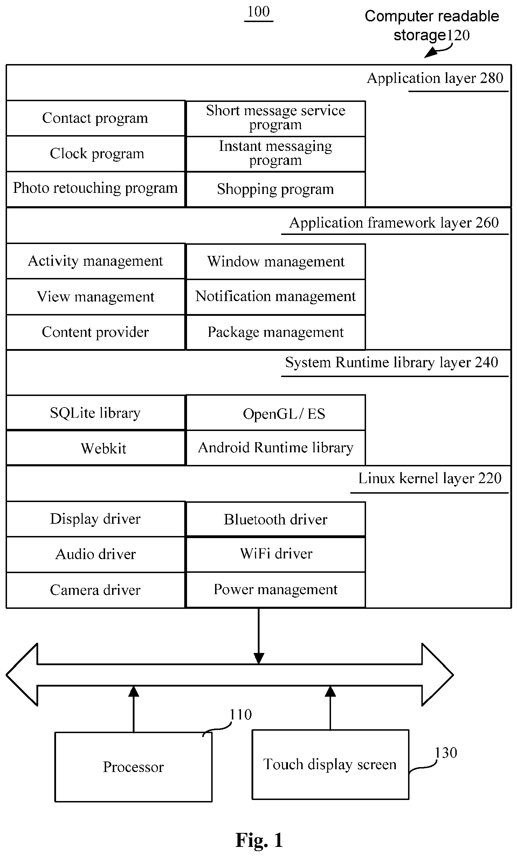

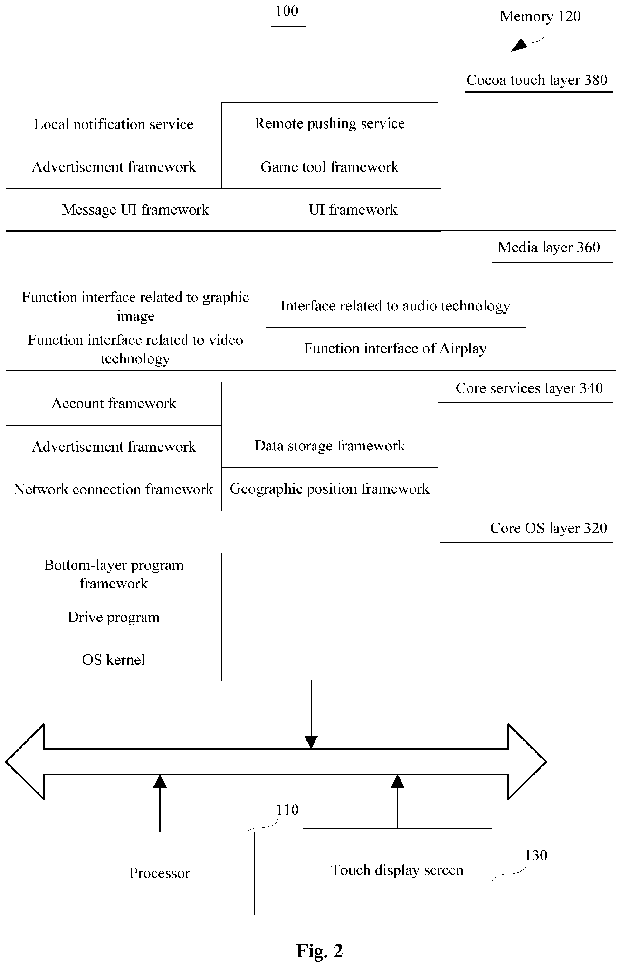

Referring to Fig. 1 and Fig. 2, structure block diagrams of a communication terminal 100 according to an exemplary embodiment of the disclosure are shown. The communication terminal 100 may be a mobile phone, a tablet computer, a notebook computer, an electronic book and the like. The communication terminal 100 in the disclosure may include at least one of the following components: a processor 110, a computer readable storage 120 and a touch display screen 130.

The processor 110 may include at least one processing core. The processor 110 connects each part in the whole communication terminal 100 by virtue of various interfaces and lines, and executes various functions and data processing of the communication terminal 100 by running or executing an instruction, program, code set or instruction set stored in the computer readable storage 120 and calling data stored in the computer readable storage 120. Optionally, the processor 110 may be implemented in at least one hardware form of Digital Signal Processing (DSP), a Field-Programmable Gate Array (FPGA) and a Programmable Logic Array (PLA). The processor 110 may integrate one or combination of more of a Central Processing Unit (CPU), a Graphics Processing Unit (GPU), a modem and the like, wherein the CPU mainly processes an Operating System (OS), a User Interface (Ul), an application program and the like; the GPU is configured to render and draw a content to be displayed on the touch display screen 130; and the modem is configured to process wireless communication. It can be understood that the modem may also not be integrated into the processor 110 but be independently implemented by a chip.

The computer readable storage 120 may include a Random Access Memory (RAM) and may also include a Read-Only Memory (ROM). According to the invention the computer readable storage 120 includes a non-transitory computer-readable storage medium. The computer readable storage 120 may be configured to store the instruction, the program, a code, the code set or the instruction set. The computer readable storage 120 may include a program storage region and a data storage region, wherein the program storage region may store an instruction configured to implement the OS, an instruction configured for at least one function (for example, a touch function, a sound playing function and an image playing function), an instruction configured to implement each of the following method embodiments and the like; and the data storage region may store data (for example, audio data and a phonebook) created according to use of the communication terminal 100 and the like.

For example, the OS is an Android system. The program and data stored in the computer readable storage 120 are shown in Fig. 1. A Linux kernel layer 220, a system Runtime library layer 240, an application framework layer 260 and an application layer 280 are stored in the computer readable storage 120. The Linux kernel layer 220 provides bottom-layer drivers for various types of hardware of the communication terminal 100, for example, a display driver, an audio driver, a camera driver, a Bluetooth driver, a Wireless Fidelity (Wi-Fi) driver and power management. The system Runtime library layer 240 provides a main feature support for the Android system through some C/C++ libraries. For example, an SQLite library provides a database support, an OpenGL/ES library provides a three-Dimensional (3D) drawing support, and a Webkit library provides a browser kernel support. The system Runtime library layer 240 further provides an Android Runtime library which mainly provides some kernel libraries to allow a developer to compile Android applications by virtue of a Java language. The disclosure framework layer 260 provides various Application Programming Interfaces (APIs) which may be used when application programs are constructed, and the developer may also construct own application programs by virtue of these APIs, for example, activity management, window management, view management, notification management, a content provider, package management, communication management, resource management and positioning management. At least one application program is run in the disclosure layer 280, and these application programs may be a contact program, short message service program, clock program, camera application and the like of the OS and may also be application programs developed by third-party developers, for example, an instant messaging program and a photo retouching program.

For example, the OS is an iPhone Operating System (iOS). The program and data stored in the computer readable storage 120 are shown in Fig. 2. The iOS includes: a Core OS layer 320, a Core services layer 340, a Media layer 360 and a Cocoa touch layer 380. The Core OS layer 320 includes an OS kernel, a drive program and bottom-layer program frameworks, and these bottom-layer program frameworks provide functions more approximate to hardware for program frameworks positioned in the Core services layer 340 to use. The Core services layer 340 provides system service and/or program frameworks required by the disclosure programs, for example, a foundation framework, an account framework, an advertisement framework, a data storage framework, a network connection framework, a geographic position framework and a motion framework. The Media layer 360 provides audio and visual interfaces for the disclosure programs, for example, an interface related to a graphic image, an interface related to an audio technology, an interface related to a video technology and an AirPlay interface related to an audio/video transmission technology. The Cocoa touch layer 380 provides frameworks related to various common interfaces for development of the disclosure programs, and the Cocoa touch layer 380 is responsible for a touch interaction operation of a user on the communication terminal 100, for example, local notification service, remote pushing service, an advertisement framework, a game tool framework, a message UI framework, a UIKit framework and a map framework.

In the frameworks shown in Fig. 2, the frames related to most of the disclosure programs include, but not limited to: the foundation framework in the core services layer 340 and the UIKit framework in the Cocoa touch layer 380. The foundation framework provides many basic object classes and data types, provide most basic system service for all of the disclosure programs and is unrelated to Uls. Classes provided by the UIKit framework are basic UI class libraries and are configured to create touch-based Uls. An iOS application program may provide a UI on the basis of the UIKit framework, so that a basic architecture of the disclosure program is provided to construct the UI to draw and process a user interaction event, a response gesture and the like.

The touch display screen 130 is configured to receive a touch operation executed by the user thereon or nearby by virtue of any proper object such as a finger and a stylus and display the UI of each application program. The touch display screen 130 is usually arranged on a front panel of the communication terminal 100. The touch display screen 130 may be designed into a full screen, a curved screen or an irregularly-shaped screen. The touch display screen 130 may further be designed into a combination of the full screen and the curved screen and a combination of the irregularly-shaped screen and the curved screen, which will not be limited in the embodiment.

### The full screen

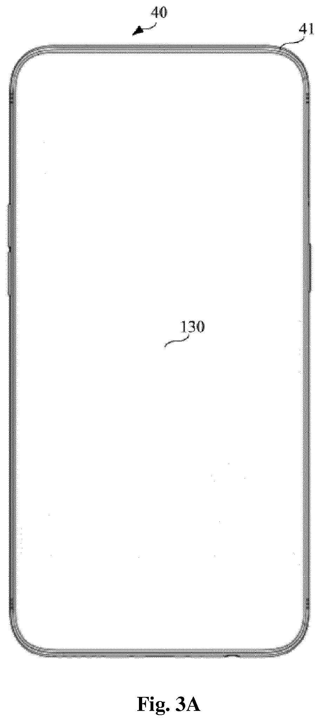

The full screen may refer to such a screen with a design that a screen-to-body ratio of the touch display screen 130 relative to the front panel of the communication terminal 100 exceeds a threshold value (for example, 80% or 90% or 95%). A calculation manner for the screen-to-body ratio is: (area of the touch display screen 130/area of the front panel of the communication terminal 100)*100%; another calculation manner for the screen-to-body ratio is: (area of an actual display region in the touch display screen 130/area of the front panel of the communication terminal 100)*100%; and another calculation manner for the screen-to-body ratio is: (diagonal of the touch display screen 130/diagonal of the front panel of the communication terminal 100)*100%. In a schematic example shown in Fig. 3A, almost the whole region on the front panel of the communication terminal 100 is the touch display screen 130, and all of the other region, except an edge formed by a middle frame 41, on the front panel 40 of the communication terminal 100 is the touch display screen 130. Four angles of the touch display screen 130 may be right angles or rounded angles.

The full screen may also be such a screen with a design that at least one front panel component is integrated to an interior or lower layer of the touch display screen 130. In at least one alternative embodiment, the at least one front panel component includes: a camera, a fingerprint sensor, a proximity light sensor, a distance sensor and the like. In some embodiments, other components on a front panel of a conventional communication terminal are integrated into the whole region or part of the region of the touch display screen 130. For example, after a light sensing element in the camera is split into multiple light sensing pixels, each light sensing pixel is integrated into a black region of each display pixel in the touch display screen 130. Since the at least one front panel component is integrated to the interior of the touch display screen 130, the full screen has a higher screen-to-body ratio.

Of course, in some other embodiments, the front panel components on the front panel of the conventional communication terminal may also be arranged on a side edge or back surface of the communication terminal 100. For example, an ultrasonic fingerprint sensor is arranged below the touch display screen 130, a bone conduction receiver is arranged inner the communication terminal 130 and the camera is arranged to be a pluggable structure positioned on the side edge of the communication terminal.

In some optional embodiments, when the communication terminal 100 adopts the full screen, edge touch sensors 120 are arranged on a single side edge, or two side edges (for example, left and right side edges) or four side edges (for example, upper, lower, left and right side edges) of the middle frame of the communication terminal 100, and the edge touch sensor 120 is configured to detect at least one operation of a touch operation, clicking operation, pressing operation, sliding operation and the like of the user over the middle frame. The edge touch sensor 120 may be any one of a touch sensor, a thermodynamic sensor, a pressure sensor and the like. The user may apply an operation on the edge touch sensor 120 to control an application program in the communication terminal 100.

### The curved screen

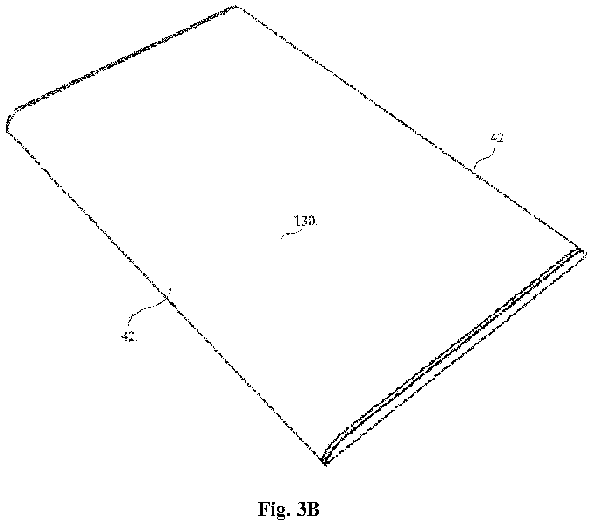

The curved screen refers to such a screen with a design that the screen region of the touch display screen 130 is not positioned in the same plane. In general, the curved screen at least has such a section that the section is in a bent shape and a projection of the curved screen in any plane perpendicular to the section is a flat, wherein the bent shape may be a U shape. Optionally, the curved screen refers to such a screen with a design that at least one side edge is in the bent shape. In an alternative embodiment, the curved screen refers to that at least one side edge of the touch display screen 130 extends to and covers the middle frame of the communication terminal 100. The side edge of the touch display screen 130 extends to and covers the middle frame of the communication terminal 100, that is, the middle frame originally without a display function and a touch function is covered to form a display region and/or an operating region, so that the curved screen is endowed with a higher screen-to-body ratio. In an alternative embodiment, in an example shown in Fig. 3B, the curved screen refers to such a screen with a design that the left and right side edges 42 are in the bent shape; or, the curved screen refers to such a screen with a design that the upper and lower side edges are in the bent shape; or, the curved screen refers to such a screen with a design that all of the upper, lower, left and right side edges are in the bent shape. In an optional embodiment, the curved screen is prepared from a touch screen material with certain flexibility.

### The irregularly-shaped screen

The irregularly-shaped screen is a touch display screen of which an apparent shape is an irregular shape, and the irregular shape is not a rectangle or a rounded rectangle. In an alternative embodiment, the irregularly-shaped screen refers to such a screen with a design that a bump, nick and/or hole are/is arranged on the rectangular or rounded rectangular touch display screen 130. In an alternative embodiment, the bump, the nick and/or the hole may be positioned on an edge, screen center or both of the touch display screen 130. When being arranged on an edge, the bump, the nick and/or the hole may be arranged at a middle position or two ends of the edge; and when being arranged in the screen center, the bump, the nick and/or the hole may be arranged in one or more regions of an upper region, left upper region, left-side region, left lower region, lower region, right lower region, right-side region and right upper region of the screen. When being arranged in multiple regions, the bump, the nick and the hole may be distributed in a centralized manner and may also be distributed in a decentralized manner; and they may be symmetrically distributed and may also be asymmetrically distributed. In an alternative embodiment, the number of the bump, the nick and/or the hole is not limited.

Since the irregularly-shaped screen can cover an upper frontal region and/or lower frontal region of the touch display screen to form the display region and/or the operating region, the touch display screen occupies a larger space on the front panel of the communication terminal, and the irregularly-shaped screen also has a higher screen-to-body ratio. In some embodiments, at least one front panel component is accommodated in the nick and/or the hole, and the front panel component includes at least one of a camera, a fingerprint sensor, a proximity light sensor, a distance sensor, a receiver, an environmental luminance sensor and a physical button.

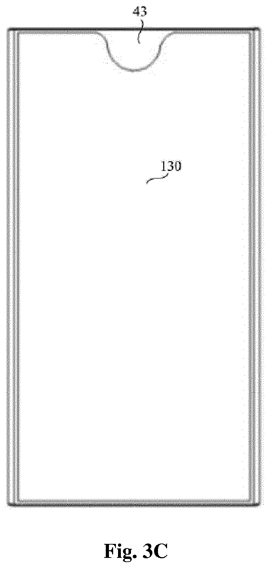

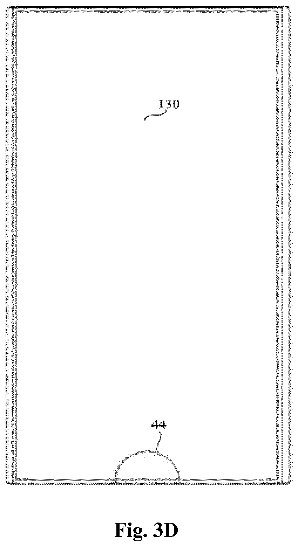

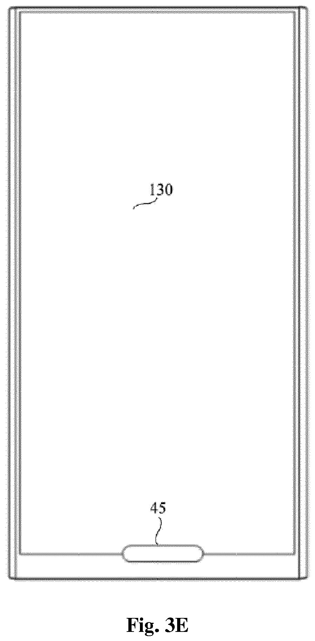

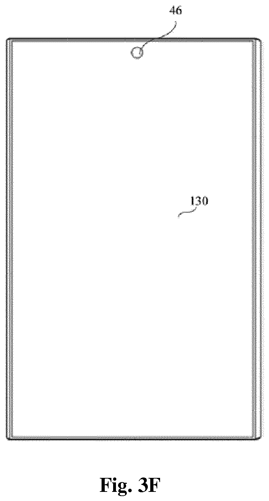

Exemplarily, the nick may be formed in one or more edges, and the nick may be a semicircular nick, an orthogonal rectangular nick, a rounded rectangular nick or an irregularly-shaped nick. In a schematic example shown in Fig. 3C, the irregularly-shaped screen may be such a screen with a design that a semicircular nick 43 is formed in a central position of an upper edge of the touch display screen 130, and a recessed position formed by the semicircular nick 43 is used for accommodating at least one front panel component of the camera, the distance sensor (also called a proximity sensor), the receiver and the environmental luminance sensor. Schematically, as shown in Fig. 3D, the irregularly-shaped screen may be such a screen with a design that a semicircular nick 44 is formed in a central position of a lower edge of the touch display screen 130, and a recessed position formed by the semicircular nick 44 is used for accommodating at least one component of the physical button, the fingerprint sensor and a microphone. In a schematic example shown in Fig. 3E, the irregularly-shaped screen may be such a screen with a design that a semielliptical nick 45 is formed in the central position of the lower edge of the touch display screen 130, meanwhile, a semielliptical nick is also formed in the front panel of the communication terminal 100, the two semielliptical nicks enclose an elliptical region, and the elliptical region is used for accommodating the physical button or a fingerprint recognition module. In a schematic example shown in Fig. 3F, the irregularly-shaped screen may be such a screen with a design that at least one small hole 45 is formed in an upper half part of the touch display screen 130, and a recessed position formed by the small hole 45 is used for accommodating at least one front panel component of the camera, the distance sensor, the receiver and the environmental luminance sensor.

In addition, those skilled in the art can understand that the structure of the communication terminal 100 shown in the above drawings does not form any limit to the communication terminal 100, and the communication terminal may include more or fewer components than those shown in the figures, or some components may be combined or different component arrangements are adopted. For example, the communication terminal 100 can further include components such as a radio frequency circuit, an input unit, a sensor, an audio circuit, a Wi-Fi component, a power supply and a Bluetooth module, which will not be elaborated herein.

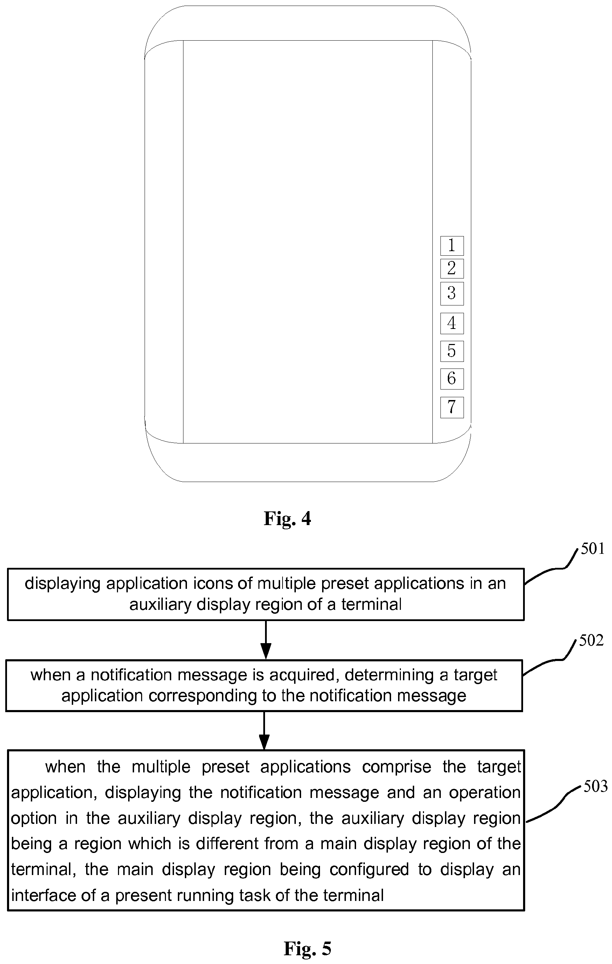

In at least one alternative embodiment, the communication terminal may be provided with a main display region and an auxiliary display region. The main display region is positioned in middle of a screen of the communication terminal and may be configured to display an interface (i.e., task interface) of a present running task of the communication terminal. The auxiliary display region is positioned on two sides of the screen of the communication terminal and is configured to display application icons of multiple preset applications. The two sides of the screen of the communication terminal may be the left side and the right side of the communication terminal, may also be the top side and the bottom side of the communication terminal. The application icons of the multiple preset applications may be vertically arranged in the auxiliary display region, in the case that the auxiliary display region is positioned on the left side and/or the right side of the communication terminal. The application icons of the multiple preset applications may be horizontally arranged in the auxiliary display region, in the case that the auxiliary display region is positioned on the top side and/or the bottom side of the communication terminal. In a possible implementation mode, the communication terminal is provided with a curved screen, the main display region includes a flat display region of the curved screen, and the auxiliary display region includes a curved display region of the curved screen. Referring to Fig. 4, a schematic diagram of the display regions of the communication terminal is provided. A middle display region of the screen of the communication terminal is the main display region, a side-edge display region is the auxiliary display region, and the application icons of the multiple preset applications such as an icon 1, an icon 2, ... and an icon 7 may be displayed in the auxiliary display region.

In at least one alternative embodiment, a technical solution is provided, and an alternative process refers to the embodiment shown in Fig. 5. According to the invention application icons of multiple preset applications are displayed in an auxiliary display region, and when a notification message of any one preset application is obtained, the communication terminal displays the notification message and an operation option nearby the application icon of the preset application in the auxiliary display region.

Fig. 5 is a flowchart of a method for displaying a notification message according to the invention. The method is applied to a communication terminal with a main display region and an auxiliary display region. Referring to Fig. 5, the method includes the following blocks.

In 501, application icons of multiple preset applications are displayed in the auxiliary display region of a communication terminal.

In 502, when a notification message is acquired, a target application corresponding to the notification message is determined.

In 503, when the multiple preset applications comprise the target application, the notification message and an operation option are displayed in auxiliary display region, the auxiliary display region being a region which is different from a main display region of the communication terminal, the main display region being configured to display an interface of a present running task of the communication terminal.

According to the method of the invention, when the notification message of the preset application is obtained, the communication terminal can display the notification message and the operation option nearby the preset application in the auxiliary display region. Since the auxiliary display region is different from the main display region configured to display a task interface in the communication terminal, when a manner of displaying the notification message in the auxiliary display region is adopted, the task interface can be prevented from being covered, and a running task of the communication terminal in the main display region also can be prevented from being disturbed.

There may be manners for displaying the notification message and an operation option in auxiliary display region. According to the invention the notification message and an operation option are displayed in a preset region in the auxiliary display region. In an embodiment, the notification message and an operation option are displayed at an upper layer of an interface of a preset region of the auxiliary display region. Thus, in an examplary embodiment, a preset region corresponding to the application icon of the target application can be determined, and then the notification message and an operation option can be displayed at an upper layer of an interface of a preset region.

The above method for displaying the notification message may be applied in many application scenarios. In an alternative embodiment, in the above scenario of displaying an application icon in the auxiliary display region, a possible implementation mode is provided. In the possible implementation mode, application icons of multiple preset applications are displayed in the auxiliary display region, and the application icons of the multiple preset applications comprise the application icon of the target application corresponding to the notification message. In the possible implementation mode, displaying the notification message and the operation option in the preset region of the auxiliary display region may comprise: a target application corresponding to the notification message is determined; since the application icon of the target application is displayed in the auxiliary display region, the notification message and the operation option are displayed in the preset region, corresponding to an application icon of the target application, of the auxiliary display region.

In the possible implementation mode, the application icons of multiple preset applications are displayed in the auxiliary display region; when the notification message is obtained, a target application corresponding to the notification message is determined; when the multiple preset applications include the target application, the notification message and an operation option are displayed in a preset region corresponding to the application icon of the target application.

In at least one alternative embodiment, many arrangement manners for arranging the application icons of multiple preset applications are displayed in the auxiliary display region. In an alternative embodiment, the application icons of multiple preset applications displayed in the auxiliary display region may be arranged vertically, in the case that the auxiliary display region is positioned on the left side and/or the right side of the communication terminal. In another alternative embodiment, the application icons of multiple preset applications displayed in the auxiliary display region may be arranged horizontally, in the case that the auxiliary display region is positioned on the top side and/or the bottom side of the communication terminal.

In a possible implementation mode, the application icons of the multiple preset applications can be vertically arranged in the auxiliary display region. According to the invention displaying the notification message and the operation option in the preset region, corresponding to the application icon of the target application, of the auxiliary display region includes at least one of the followings:
the application icon of the target application is moved to a first position in the application icons of the multiple preset applications, and the notification message and the operation option are displayed in a region above the application icon of the target application;
the application icon above the application icon of the target application is moved upwards, and the notification message and the operation option are displayed in a region between the application icon of the target application and the application icon above the application icon of the target application;
the application icon below the application icon of the target application is moved downwards, and the notification message and the operation option are displayed in a region between the application icon of the target application and the application icon below the application icon of the target application.

According to an embodiment, moving the application icon of the target application to the first position in the application icons of the multiple preset applications may include that:
a display position of the application icon of the target application is modified into the first position in the application icons of the multiple preset applications, and display positions of other application icons in the application icons of the multiple preset applications are correspondingly modified.

It is also possible that when the display positions of the other application icons in the application icons of the multiple preset applications are correspondingly modified, the modifying manner may be different according to the region where the notification message and the operation option need to be displayed.

According to another embodiment, when the notification message and the operation option need to be displayed in the region above the application icon of the target application, or in the region on the left side of the application icon of the target application, modifying the display positions of the other application icons in the application icons of the multiple preset applications are correspondingly may include at least one of the followings:
a display position of a first icon is modified into an original display position of an icon which is the next icon of the first icon, the first icon being an application icon, which is displayed according to a display sequence before the application icon of the target application in the application icons of the multiple preset applications;
a display position of a second icon is modified into an original display position of the application icon of the target application, the second icon being an application icon, which is displayed in a first position according to a display sequence, in the application icons of the multiple preset applications.

When the notification message and the operation option need to be displayed in the region below the above the application icon of the target application, or in the region right of the application icon of the target application, modifying the display positions of the other application icons in the application icons of the multiple preset applications may correspondingly include: a display position of a third icon is modified into an original display position of an icon which is the next icon of the third icon, the third icon being an application icon, which is displayed according to a display sequence after the application icon of the target application, in the application icons of the multiple preset applications, and a display position of a fourth icon is modified into an original display position of an icon which is the next second icon of the fourth icon, the fourth icon being an application icon, which is displayed according to a display sequence before the application icon of the target application, in the application icons of the multiple preset applications.

In a possible implementation mode, moving upwards the application icon above the application icon of the target application may include that at least one of following:
the application icon above the application icon of the target application is moved upwards according to a display position of the application icon above the application icon of the target application and a preset movement distance;
the application icon above the application icon of the target application is moved upwards to a top of the auxiliary display region.

In a possible implementation mode, moving downwards the application icon below the application icon of the target application may include that at least one of following:
the application icon below the application icon of the target application is moved downwards according to a display position of the application icon below the application icon of the target application and a preset movement distance;
the application icon below the application icon of the target application is moved downwards to a bottom of the auxiliary display region.

In a possible implementation mode, the communication terminal is provided with one of following screens:
a curved screen, the main display region including a flat display region of the curved screen, and the auxiliary display region including a curved display region of the curved screen;
a full screen, the main display region including a middle display region of the full screen, and the auxiliary display region including a display region on at least one side of the full screen, such as a display region on the left side of the full screen, or a display region on the bottom side of the full screen;
an irregularly-shaped screen, the main display region including a middle display region of the irregularly-shaped screen, and the auxiliary display region including a display region on at least one side of the irregularly-shaped screen, such as a display region on the left side of the irregularly-shaped screen, or a display region on the bottom side of the irregularly-shaped screen.

In a possible implementation mode, the auxiliary display region is positioned on two sides of the screen of the communication terminal.

All of the above embodiments may be freely combined into optional embodiments of the disclosure, which will not be elaborated one by one herein.

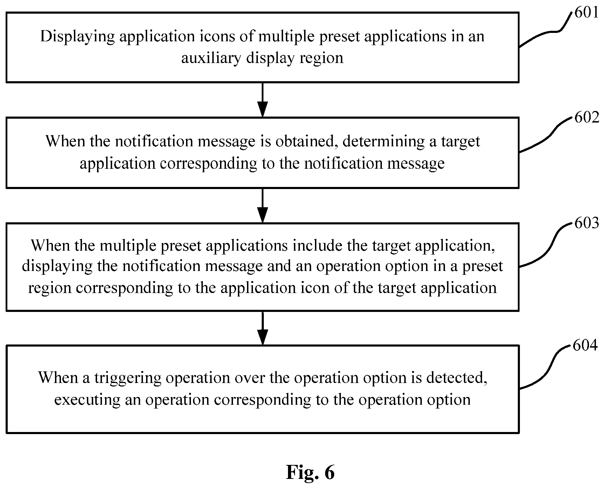

Fig. 6 is a flowchart of a method for displaying a notification message according to another embodiment of the invention. The method is executed by a communication terminal, and referring to Fig. 6, the method includes:
At 601, application icons of multiple preset applications are displayed in an auxiliary display region.

In an alternative example, the multiple preset applications may be preset system default applications of the communication terminal and may also be autonomously set by a user. Under the condition of autonomously setting by the user, the communication terminal may provide a function of setting a preset application. The communication terminal may display a setting interface when receiving a setting request for requesting to set a preset application. Application identifiers of all applications installed on the communication terminal may be provided in the setting interface, the user may select some application identifiers from the displayed application identifiers, and the communication terminal determines the applications corresponding to the application identifiers selected by the user as the preset applications.

The preset applications are displayed in the auxiliary display region of the communication terminal, and when the communication terminal executes a task in a main display region, the user may operate the application icon of any one preset application in the auxiliary display region, as to realize a function of the preset application of which the application icon is operated. It is not required to quit the present running task in the main display region to return to a desktop of the communication terminal and then operate the application icon on the desktop, so that convenience for use of the preset application is greatly enhanced.

At 602, when a notification message is obtained, a target application corresponding to the notification message is determined.

In an alternative example, the operation that the communication terminal obtains the notification message may include that: the communication terminal receives the notification message, for example, the communication terminal receives a chat message from a friend of a social application, or, the communication terminal generates the notification message, for example, when an incoming call event occurs, the communication terminal may locally generate an incoming call notification message.

In another example, when a notification message of any one application is obtained, the communication terminal may determine the target application corresponding to the notification message and execute different blocks according to different applications, namely displaying the notification message in different display manners. When the target application corresponding to the notification message is not a preset application, the communication terminal may display the notification message in any display manner, for example, except for the display manner described by the subsequent Block 603 to Block 604); and when the target application corresponding to the notification message is a preset application, the communication terminal may execute subsequent Block 603 to Block 604.

In a possible implementation mode, the operation that the communication terminal determines the target application corresponding to the notification message may include that: the communication terminal determines an application identifier corresponding to the notification message according to a message packet name of the notification message, namely determining the target application corresponding to the notification message, the message packet name carrying an application identifier of an application on the communication terminal. In an alternative example, the communication terminal may determine the application corresponding to the application identifier carried in the message packet name of the notification message as the target application corresponding to the notification message. A manner for rapidly and accurately determining the target application corresponding to the notification message is provided.

At 603, when the multiple preset applications include the target application, the notification message and an operation option are displayed in a preset region corresponding to the application icon of the target application.

In another example, the preset region corresponding to the application icon of the target application may refer to a region nearby the application icon of the preset application, for example, a region above or region below the application icon of the target application. A lower edge of the region above the application icon of the target application may be overlapped with or spaced by a certain distance from an upper edge of the application icon of the target application, and an upper edge of the region below the application icon of the target application may be overlapped with or spaced by a certain distance from a lower edge of the application icon of the target application. The operation option may include a first operation option and a second operation option, the first operation option is configured to read the notification message or accept the notification message, and the second operation option is configured to ignore the notification message or reject the notification message. The notification message displayed by the communication terminal may be a prompting message, and the user may view a specific content of the notification message through the first operation option.

In another example, the application icons of the multiple preset applications are displayed in the auxiliary display region of the communication terminal, so that the communication terminal, when obtaining a notification message of any one preset application, may display the notification message and the operation option in the auxiliary display region to avoid disturbing the running present task of the communication terminal in the main display region. Therefore, after determining the target application corresponding to the notification message at Block 602, the communication terminal may further determine whether the target application is included in the multiple preset applications or not, namely whether the target application is a preset application or not.

At Block 602, when the multiple preset applications include the target application, it is indicated that the target application is a preset application and the application icon of the target application is displayed in the auxiliary display region of the communication terminal, so that the communication terminal can display the notification message and the operation option in the auxiliary display region. Considering that the application icons of the multiple preset applications are displayed in the auxiliary display region, for preventing any one application icon from being covered, the communication terminal may display the notification message and the operation option in a blank region of the auxiliary display region. For making it convenient for the user to directly learn about the specific application corresponding to the notification message, the communication terminal may display the notification message and the operation option in the preset region corresponding to the application icon of the target application.

In another embodiment, the operation that the communication terminal displays the notification message and the operation option in the preset region corresponding to the application icon of the target application includes the following possible implementation modes:
in the first implementation mode, the application icon of the target application is moved to a first position in the application icons of the multiple preset applications, and the notification message and the operation option are displayed in a region above and/or below the application icon of the target application. The following alternative embodiment is described by taking an example of that the application icon of the target application is moved to a first position in the application icons of the multiple preset applications, and the notification message and the operation option are displayed in a region above the application icon of the target application.

For the condition shown in Fig. 4 that the blank region in the auxiliary display region is positioned above the first position in the application icons of the multiple preset applications, wherein the first position is obtained by sequencing according to a sequence from top to bottom. The communication terminal may move the application icon of the target application to the first position in the application icons of the multiple preset applications, thereby displaying the notification message of the target application in the blank region above the application icon of the target application.

In at least one alternative embodiment, the operation that the communication terminal moves the application icon of the target application to the first position in the application icons of the multiple preset applications may include that: the communication terminal modifies a display position of the application icon of the target application into the first position in the application icons of the multiple preset applications, and correspondingly modifies the display positions of the other application icons in the application icons of the multiple preset applications. Displaying of the application icon at the first position is implemented in a manner of modifying the display position. Since the blank region exists nearby the first position, the communication terminal can display the notification message in the blank region nearby the application icon of the target application, and in such a manner, displaying of the notification message may not cover a task interface of the main display region and may also not cover the other application icons in the auxiliary display region.

In an alternative embodiment, the operation that the communication terminal correspondingly modifies the display positions of the other application icons may be performed in the following two manners.

The first manner: the display position of a first icon is modified into the original display position of the icon which is the next icon of the first icon, the first icon being an application icon, which is displayed according to a display sequence before the application icon of the target application in the application icons of the multiple preset applications.

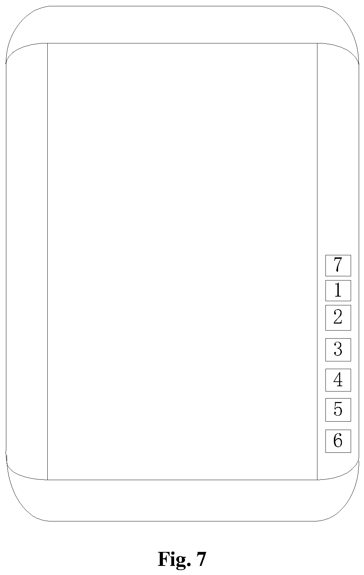

In this manner, the application icon corresponding to the notification message is moved to the first position and all of the application icons of which display sequences are before the application icon of the target application before movement are moved backwards by one icon. As shown in Fig. 4, display sequences of the application icons of the multiple preset application before movement are: an icon 1 (the first position), an icon 2, ... and an icon 7. Referring to Fig. 7, a schematic diagram of the application icons of the multiple preset applications in the auxiliary display region is provided. For example, the icon 7 in Fig. 4 is the application icon corresponding to the notification message. After movement in the above manner, the display sequences shown in Fig. 4 are changed into display sequences shown in Fig. 7: the icon 7 (the first position), the icon 1, the icon 2, ... and the icon 6. It can be seen that display positions of the icons 1 to 6 (i.e., the first icon) before the icon 7 after movement are respectively the original display positions of the icon which is the next icon of the corresponding icons before movement. For example, the display position of the icon 1 is the original display position of the icon 2, the display position of the icon 2 is the original display position of the icon 3, ..., and the display position of the icon 6 is the original display position of the icon 7.

By modifying the display positions of the application icon corresponding to the notification message and modifying the display positions of the other application icons influenced by the movement of the application icon corresponding to the notification message, the application icon of the target application may be moved to the first position for displaying. An effective manner of moving the application icon is provided.

The second manner: the display position of a second icon is modified into the original display position of the application icon of the target application, the second icon being an application icon, which is displayed in a first position according to a display sequence, in the application icons of the multiple preset applications.

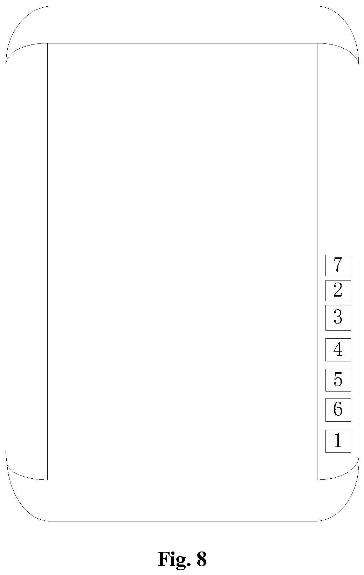

In this manner, the display positions of the application icon corresponding to the notification message and the application icon originally at the first position are exchanged, and the display positions of the other application icons are kept unchanged. Referring to Fig. 8, a schematic diagram of the application icons of the multiple preset applications in the auxiliary display region is provided. After movement in this manner, the display sequences shown in Fig. 4 are changed into: the icon 7 (the first position), the icon 2, ... and the icon 1. It can be seen that the display position of the icon 1 (i.e., the second icon) originally at the first position after movement is the original display position of the icon 7 (the application icon corresponding to the notification message) before movement.

By exchanging the display position of the application icon corresponding to the notification message and the display position of the application icon originally at the first position, the application icon of the target application can be moved to the first position for displaying. Since the display positions of the two icons are required to be modified, movement efficiency is improved.

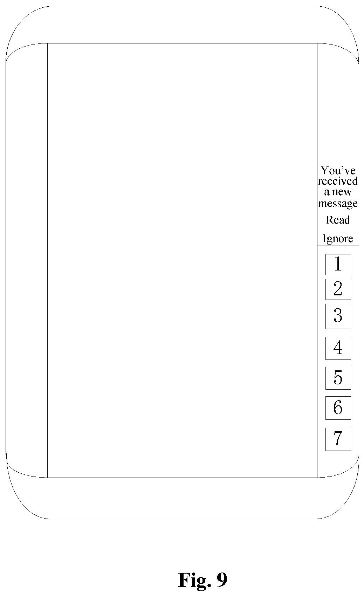

After moving the application icon corresponding to the notification message to the first position, the communication terminal may display the notification message and the operation option in the region above the application icon of the target application (i.e., the blank region above the first position). For example, the communication terminal may display the notification message and the operation option in a form of a message prompting box. The communication terminal may adaptively display the message prompting box according to a display size of the auxiliary display region to ensure that the notification message in the message prompting box can be completely displayed. Referring to Fig. 9, a schematic diagram of displaying the notification message and the operation option is provided. The communication terminal may display one message prompting box in the region above the application icon of the target application in the auxiliary display region and display the notification message "You've received a new message" and two operation options "Read" and "Ignore" in the message prompting box. A width of the message prompting box shown in Fig. 9 is the same as a width of the auxiliary display region, and of course, the width of the message prompting box may also be smaller than the width of the auxiliary display region. There are no limits made in the embodiment of the disclosure. In addition, the two operation options shown in Fig. 9 are displayed up and down. Of course, when the width of the auxiliary display region is relatively large and the two operation options may be accommodated, the two operation options may be displayed side by side. There are no limits made in the embodiment of the disclosure.

In addition, in order to enable the user to more directly learn about the specific application icon corresponding to the notification message in the auxiliary display region, the communication terminal may display the application icon, the notification message and the operation option of the target application according to a preset display effect. The preset display effect is configured to distinguish the application icon of the target application corresponding to the notification message from the other application icons in the auxiliary display region. For example, the preset display effect may be a display effect of adding a background color to make the background color of the application icon of the target application different from background colors of the other application icons, so that the user may rapidly distinguish the specific icon corresponding to the notification message in the auxiliary display region through the background colors. Of course, the preset display effect may further be any other display effect capable of realizing a distinguishing function, for example, a display effect of enlarging the icon. There are no limits made in the embodiment of the disclosure.

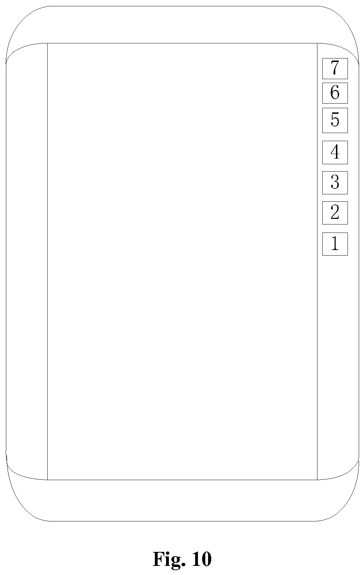

It is important to note that the possible implementation mode is described with the condition shown in Fig. 4 that the blank region in the auxiliary display region is positioned above the first position in the application icons of the multiple preset applications, wherein the first position is sequenced according to the sequence from top to bottom as an example. Alternatively, the blank region in the auxiliary display region may also be positioned below the first position in the application icons of the multiple preset applications, wherein the first position is sequenced according to a sequence from bottom to top. Referring to Fig. 10, a schematic diagram of the application icons of the multiple preset applications in the auxiliary display region is provided. The display sequences of the application icons of the multiple preset applications are: the icon 1 (the first position), the icon 2, ... and the icon 7.

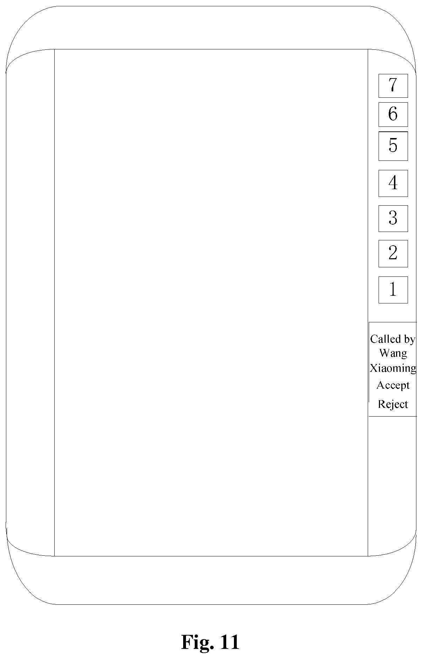

For the condition shown in Fig. 10 that the blank region in the auxiliary display region is positioned below the first position, wherein the first position is sequenced according to the sequence from bottom to top, the communication terminal, after moving the application icon corresponding to the notification message to the first position, may display the notification message and the operation option in the region below the application icon of the target application (i.e., the blank region below the first position). The process that the communication terminal moves the application icon of the target application to the first position for displaying is similar to the abovementioned possible implementation mode and will not be elaborated herein. Referring to Fig. 11, a schematic diagram of displaying the notification message and the operation option is provided. The communication terminal may display the notification message and the operation option in the region below the application icon of the target application. As shown in Fig. 11, a notification message "Called by Wang Xiaoming" and two operation options "Accept" and "Reject" are displayed.

It is to be noted that the abovementioned possible implementation mode is described by taking an example that the notification message and the operation option are displayed in the region above the application icon of the target application. The abovementioned possible implementation mode may be implemented by the following operation that the notification message and the operation option are displayed in the region between the application icon of the target application and an application icon below the application icon of the target application. The process different from the operation that the notification message and the operation option are displayed in the region above the application icon of the target application is that: since there is no blank region below the application icon of the target application, in order to display the notification message and the operation option in the region below the application icon of the target application, the application icons below the application icon of the target application are moved downwards to reserve a blank region below the application icon of the target application. The notification message and the operation option are displayed in the left blank region below the application icon of the target application.

In at least one alternative embodiment, when moving the application icon of the target application to the first position in the application icons of the multiple preset applications, the same process with the operation that the notification message and the operation option are displayed in the region above the application icon of the target application is that: a display position of the application icon of the target application is modified into the first position in the application icons of the multiple preset applications.

The different process with the operation that the notification message and the operation option are displayed in the region above the application icon of the target application is that: when the notification message and the operation option need to be displayed in the region below the application icon of the target application, correspondingly modifying the display positions of the other application icons in the application icons of the multiple preset applications may comprises: a display position of a third icon is modified into an original display position of a icon which is the next icon of the third icon, the third icon being an application icon, which is displayed according to a display sequence after the application icon of the target application, in the application icons of the multiple preset applications, and a display position of a fourth icon is modified into an original display position of a icon which is the next second icon of the fourth icon, the fourth icon being an application icon, which is displayed according to a display sequence before the application icon of the target application, in the application icons of the multiple preset application.

Similarly, the first position in the above described embodiment is sequenced according to the sequence from top to bottom, and the notification message and the operation option are displayed in the region between the application icon of the target application and an application icon below the application icon of the target application. In another alternative embodiment, the first position may be sequenced according to the sequence from bottom to top, and the notification message and the operation option are displayed in the region above the application icon of the target application.

In the second possible implementation mode, the application icon above the application icon of the target application is moved upwards, and/or, the application icon below the application icon of the target application is moved downwards, and the notification message and the operation option are displayed in a region between the application icon of the target application and the other application icons. In an alternative embodiment, an application icon above the application icon of the target application is moved upwards, and the notification message and the operation option are displayed in a region between the application icon of the target application and the application icon above the application icon of the target application; In an alternative embodiment, an application icon below the application icon of the target application is moved downwards, and the notification message and the operation option are displayed in a region between the application icon of the target application and the application icon below the application icon of the target application.

For the condition shown in Fig. 4 that the blank region in the auxiliary display region is positioned above the first position in the application icons of the multiple preset applications, wherein the first position is sequenced according to the sequence from top to bottom, when the display position of the application icon of the target application is not the first position, it is indicated that there is not a blank region but another icon displayed above the application icon of the target application, the communication terminal may move upwards the application icon above the application icon of the target application to reserve a blank region between the application icon of the target application and the application icon above the application icon of the target application, as to display the notification message. In at least one alternative embodiment, the communication terminal may move upwards the application icon above the application icon of the target application in the following two manners.

The first manner: the application icon above the application icon of the target application is moved upwards according to the display position of the application icon above the application icon of the target application and a preset movement distance.

In this manner, the communication terminal may determine a target display position after the movement of the application icon above the application icon of the target application according to the present display position of the application icon above the application icon of the target application and the preset movement distance, a distance between the target display position and the present display position being the preset movement distance, and then the communication terminal modifies the display position of the application icon above the application icon of the target application into the target display position, thus moving the application icon above the application icon of the target application to the target display position for displaying.

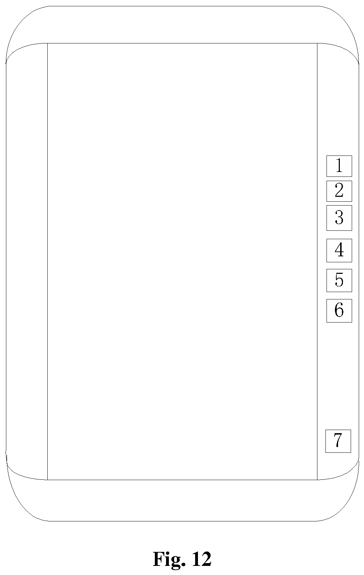

In this manner, an application icon before the application icon corresponding to the notification message (i.e., the application icon above the application icon of the target application) is moved upwards by the preset movement distance. As shown in Fig. 4, the display sequences of the application icons of the multiple preset applications before movement are: the icon 1 (the first position), the icon 2, ... and the icon 7. For example, the icon 7 is the application icon corresponding to the notification message, the application icons above the application icon of the target application are the icon 1 (the first position), the icon 2, ...... and the icon 6, and in the movement according to the above manner, all of the icons 1 to 6 are required to be moved upwards by the preset movement distance. Referring to Fig. 12, a schematic diagram of the application icons of the multiple preset applications in the auxiliary display region is provided. After movement in this manner, a region is reserved between the icon 7 and the icons 1 to 6 (i.e., the application icons above the application icon of the target application).

It is important to note that, for ensuring that the notification message may be completely displayed in the region reserved after movement of the application icons, the preset movement distance cannot be too short. Therefore, the communication terminal may set the preset movement distance according to a fixed size, wherein the fixed size refers to a display size of the notification message. For example, when the communication terminal adopts the message prompting box to display the notification message, the fixed size is a size of the message prompting box. In at least one alternative embodiment, the communication terminal may set the preset movement distance according to a height in the fixed size, for example, the preset movement distance is set to be more than or equal to the height in the fixed size.

The second manner: the application icon above the application icon of the target application is moved upwards to a top of the auxiliary display region.

In this manner, when there is one application icon above the application icon of the target application, that is, there is one application icon before the application icon corresponding to the notification message, the communication terminal may modify the display position of the application icon above the application icon of the target application into a top position of the auxiliary display region.

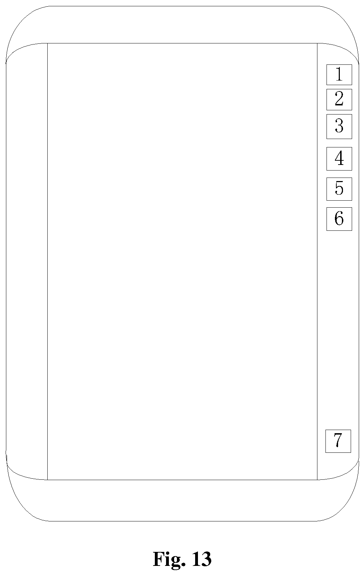

Of course, when there are multiple application icons above the application icon of the target application, that is, there are multiple application icons before the application icon corresponding to the notification message, the communication terminal may modify the display position of the application icon of which the display sequence is the first in the multiple application icons into the top position of the auxiliary display region and correspondingly modify the display positions of the other application icons to sequentially arrange downwards the multiple application icons from the top of the auxiliary display region. The multiple application icons are wholly displayed at the top of the auxiliary display region. Referring to Fig. 13, a schematic diagram of the application icons of the multiple preset applications in the auxiliary display region is provided. After movement in this manner, the icons 1 to 6 (i.e., the application icons above the application icon of the target application) before the icon 7 (i.e., the application icon corresponding to the notification message) are displayed at the top of the auxiliary display region.

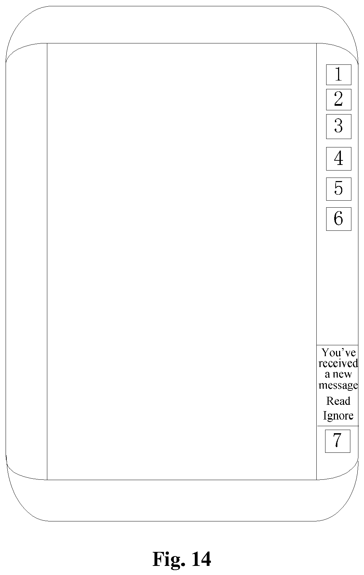

After moving the application icon before the application icon corresponding to the notification message, the communication terminal may display the notification message and the operation option in the blank region between the application icon of the target application and the application icon before the application icon of the target application. Referring to Fig. 14, a schematic diagram of displaying the notification message and the operation option is provided. The communication terminal may display a message prompting box in the blank region between the application icon of the target application and the application icon before the application icon of the target application in the auxiliary display region and display the notification message "You've received a new message" and two operation options "Read" and "Ignore" in the message prompting box.

The application icon nearby the application icon corresponding to the notification message is moved to reserve the region nearby the application icon of the target application as to display the notification message, so that displaying of the notification message may not cover the task interface of the main display region and may also not cover the other application icons in the auxiliary display region.

It is noted that the above alternative embodiment is described by taking an example that an application icon above the application icon of the target application is moved upwards, and the notification message and the operation option are displayed in a region between the application icon of the target application and the application icon above the application icon of the target application, the second possible implementation mode may be implemented by the following blocks: an application icon below the application icon of the target application is moved downwards, and the notification message and the operation option are displayed in a region between the application icon of the target application and the application icon below the application icon of the target application. For example, in the condition shown in Fig. 10 that the blank region in the auxiliary display region is positioned below the first position, wherein the first position is sequenced according to the sequence from bottom to top, the communication terminal may move downwards the application icon below the application icon of the target application to reserve a blank region configured to display the notification message between the application icon of the target application and the application icon below the application icon of the target application. In an alternative embodiment, the communication terminal may move downwards the application icon below the application icon of the target application according to the display position of the application icon below the application icon of the target application and the preset movement distance. Of course, the communication terminal may also directly move downwards the application icon below the application icon of the target application at the bottom of the auxiliary display region.

In the first possible implementation mode and the second possible implementation mode, the display positions of the application icons in the auxiliary display region are modified to reserve the blank region nearby the application icon having the notification message, so that the notification message and the operation option can be displayed in the blank region in the auxiliary display region without covering the other application icons in the auxiliary display region.

In the third possible implementation mode, the preset region corresponding to the application icon of the target application is determined, and the notification message and the operation option are displayed at an upper layer of an interface of the preset region.

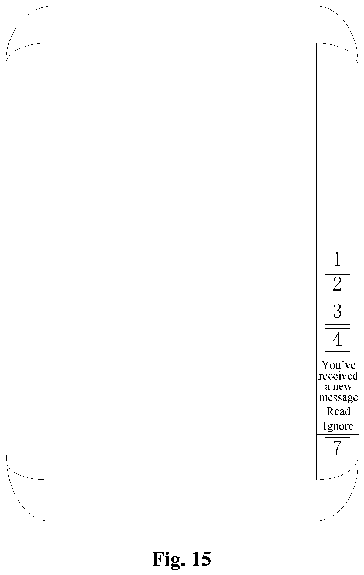

For the condition shown in Fig. 4 that the blank region in the auxiliary display region is positioned above the first position in the application icons of the multiple preset applications, wherein the first position is sequenced according to the sequence from top to bottom, when the present display position of the application icon of the target application is the first position, it is indicated that the region above the application icon of the target application is a blank region, so that the communication terminal can directly display the notification message and the operation option in the region above the application icon of the target application without moving the application icon of the target application. Of course, even if the present display position of the application icon of the target application is not the first position, the communication terminal may also determine the preset region corresponding to the application icon of the target application, for example, the region above the application icon of the target application, and display the notification message and the operation option at the upper layer of the interface of the preset region, but the other icons may be covered under this condition. Referring to Fig. 15, a schematic diagram of displaying the notification message and the operation option is provided. The communication terminal may display a message prompting box at the upper layer of the interface of the region above the application icon of the target application in the auxiliary display region and display the notification message "You've received a new message" and the two operation options "Read" and "Ignore" in the message prompting box, wherein the message prompting box covers the icon 5 and icon 6 above the icon 7.

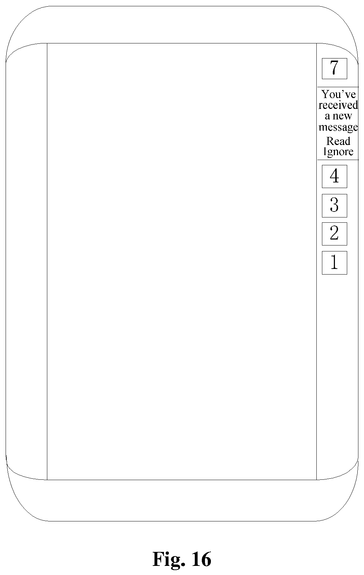

For the condition shown in Fig. 10 that the blank region in the auxiliary display region is positioned below the first position (i.e., the first position) in the application icons of the multiple preset applications, wherein the first position is sequenced according to the sequence from bottom to top, no matter whether the application icon of the target application is at the first position or not, the communication terminal may directly determine the preset region corresponding to the application icon of the target application without moving the application icon of the target application, for example, the region below the application icon of the target application, and display the notification message and the operation option at the upper layer of the interface of the preset region. Referring to Fig. 16, a schematic diagram of displaying the notification message and the operation option is provided. The communication terminal may display a message prompting box at the upper layer of the interface of the region below the application icon of the target application in the auxiliary display region and display the notification message "You've received a new message" and the two operation options "Read" and "Ignore" in the message prompting box, wherein the message prompting box covers the icon 5 and icon 6 below the icon 7.

The notification message is displayed nearby the application icon of the target application in the auxiliary display region, and since the auxiliary display region is different from the main display region configured to display the task interface, displaying of the notification message may not disturb the present running task of the communication terminal in the main display region.

In the first possible implementation mode, the second possible implementation mode and the third possible implementation mode, the specific implement is described by taking an example that the communication terminal displays the notification message and the operation option in the region above or region below the application icon of the target application in the auxiliary display region. Of course, the communication terminal may also display the notification message and the operation option in the left-side region of the application icon of the target application in the auxiliary display region, such as the following fourth possible implementation mode.

In the fourth possible implementation mode, the notification message and the operation option are displayed in the left-side and/or right-side region of the application icon of the target application. Of course, the fourth possible implementation mode may be implemented by the following blocks: the notification message and the operation option are displayed in the region above and/or below the application icon of the target application.

In at least one alternative embodiment, when the arrangement of the application icons of the preset application are different in the auxiliary display region, displaying the notification message and the operation option in the preset region, corresponding to the application icon of the target application, of the auxiliary display region may be different. In an alternative embodiment, displaying the notification message and the operation option in the preset region, corresponding to the application icon of the target application, of the auxiliary display region may comprise at least one of following:
when the application icons of the multiple preset applications are vertically arranged in the auxiliary display region, the notification message and the operation option are displayed in the left-side and/or right-side region of the application icon of the target application.
when the application icons of the multiple preset applications are horizontally arranged in the auxiliary display region, the notification message and the operation option are displayed in the region above and/or below the application icon of the target application.

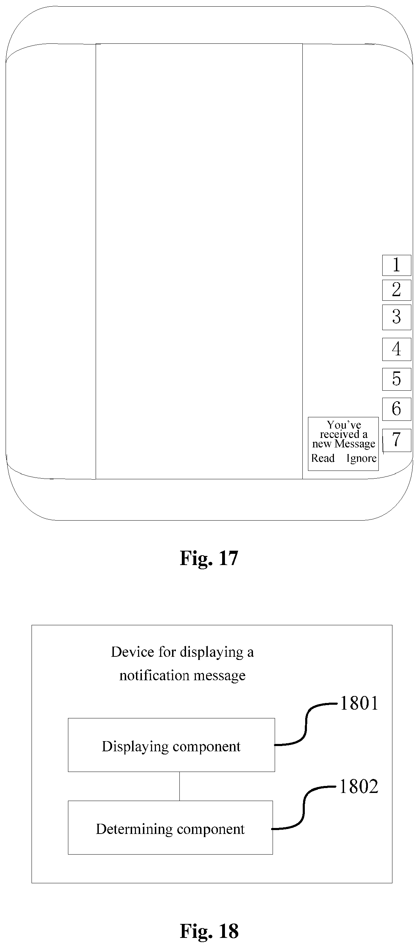

Referring to Fig. 17, a schematic diagram of displaying the notification message and the operation option is provided. The communication terminal may display a message prompting box in the left-side region of the application icon of the target application in the auxiliary display region and display the notification message "You've received a new message" and the two operation options "Read" and "Ignore" in the message prompting box. A left edge of the message prompting box shown in Fig. 17 is in the auxiliary display region, and of course, when the width of the auxiliary display region is not large enough, the left edge of the message prompting box may also be overlapped with a left edge of the auxiliary display region. There are no limits made in the embodiment of the disclosure.

At 604, when a triggering operation over the operation option is detected, an operation corresponding to the operation option is executed.

In a possible implementation mode, when the communication terminal detects a triggering operation over the first operation option (for example, the "Read" option shown in Fig. 9 or the "Accept" option shown in Fig. 11), the communication terminal may display an interface of the application corresponding to the notification message. For example, the interface of the target application is displayed in the main display region, wherein the interface of the target application includes the specific content of the notification message. A rapid operation manner for entering the interface of the application on the basis of the operation option of the notification message is provided.

For example, when the notification message is a chat message from a friend of a social application, the interface of the target application may be a chat interface for the user and the friend; and when the notification message is an incoming call message, the interface of the target application may be an incoming call interface. The interface of the application is displayed, so that the user may conveniently read the specific content of the notification message and perform further processing on the notification message on the interface of the target application, for example, replying to, deleting or copying the notification message.

In another possible implementation mode, when the communication terminal detects a triggering operation over the second operation option (for example, the "Read" option shown in Fig. 9 or the "Reject" option shown in Fig. 11), the communication terminal may ignore the notification message or reject the notification message and keep the present interface unchanged. It is important to note that the embodiment of the disclosure is described with the condition that the communication terminal displays the notification message of the preset application in the auxiliary display region as an example, and actually, whether to display the notification message of the preset application in the auxiliary display region or not may be set by the user. For example, the communication terminal may provide a specified button, the specified button is configured for the user to set whether to display the notification message of the preset application in the auxiliary display region or not, and the specified button may have two states: on and off states. When the user sets the specified button into the on state, that is, the user sets the notification message to be displayed in the auxiliary display region, the communication terminal may display the notification message according to Block 601 to Block 604; when the user sets the specified button into the off state, that is, the user sets the notification message not to be displayed in the auxiliary display region, the communication terminal may display the notification message in any other display manner; and when the user does not execute any operation on the specified button, that is, the user does not perform setting, the communication terminal may display the notification message according to a system default setting, if the default setting is a setting that the specified button is on as a default, the communication terminal may adopt the display manner including Block 601 to Block 604, and if the default setting is a setting that the specified button is off as a default, the communication terminal may display the notification message in any other display manner.

According to an embodiment of the disclosed method, when a notification message of a preset application is obtained, the communication terminal may display the notification message and the operation option nearby the preset application in the auxiliary display region. Since the auxiliary display region is different from the main display region configured to display a task interface in the communication terminal, when a manner of displaying the notification message in the auxiliary display region is adopted, the task interface may be prevented from being covered, and a running task of the communication terminal in the main display region may also be prevented from being disturbed.

In at least one alternative embodiment, the communication terminal may move an application icon of the preset application to the first position nearby which there is a blank region in the auxiliary display region and display the notification message in the blank region nearby the application icon. The communication terminal may also move the application icon nearby the application icon of the preset application to reserve a blank region nearby the application icon in the auxiliary display region and display the notification message in the blank region. Therefore, not only a purpose of displaying the notification message nearby the preset application in the auxiliary display region is achieved, but also an effect of preventing the other application icons in the auxiliary display region from being covered is achieved.

In addition, the notification message and the operation option are displayed at the same time, and when reading the notification message, the user may execute the triggering operation on the operation option to rapidly implement the corresponding operation, so that a rapid operation manner of reading the specific content of the notification message is provided.

Fig. 18 is a structure diagram of a device for displaying a notification message according to an embodiment of the disclosure. The device is applied to a communication terminal with a main display region and an auxiliary display region. Referring to Fig. 18, the device includes:
a displaying component 1801, configured to display application icons of multiple preset applications in the auxiliary display region; and
a determining component 1802, configured to, when the notification message is obtained, determine a target application corresponding to the notification message, wherein
the displaying component 1801 is further configured to, when the multiple preset applications include the target application, display the notification message and an operation option in the auxiliary display region, the auxiliary display region being a region which is different from a main display region of the communication terminal, the main display region being configured to display an interface of a present running task of the communication terminal.

In the present embodiment, the displaying component 1801 is configured to implement at least one of following operations:
to move the application icon of the target application to a first position in the application icons of the multiple preset applications and display the notification message and the operation option in a region above the application icon of the target application;
to move upwards the application icon above the application icon of the target application, and display the notification message and the operation option in a region between the application icon of the target application and the application icon above the application icon of the target application;
to move downwards the application icon below the application icon of the target application and display the notification message and the operation option in a region between the application icon of the target application and the application icon below the application icon of the target application.

It may also be possible that the displaying component 1801 is configured to modify a display position of the application icon of the target application into the first position in the application icons of the multiple preset applications and correspondingly modify display positions of the other application icons in the application icons of the multiple preset applications.

Further it can be possible that the displaying component 1801 is configured to modify the display position of a first icon into the original display position of a icon which is the next icon of the first icon, the first icon being an application icon, which is displayed according to a display sequence before the application icon of the target application, in the application icons of the multiple preset applications; or,
the displaying component 1801 is configured to modify the display position of a second icon into the original display position of the application icon of the target application, the second icon being an application icon, which is displayed in a first position according to a display sequence, in the application icons of the multiple preset applications.

In a possible implementation of the invention, the displaying component 1801 is configured to implement at least one of following operations:
to move upwards the application icon above the application icon of the target application according to the display position of the application icon above the application icon of the target application and a preset movement distance;
to move upwards the application icon above the application icon of the target application to a top of the auxiliary display region.

In yet another possible implementation of the invention, the displaying component 1801 is configured to implement at least one of following operations:
to move downwards the application icon below the application icon of the target application according to the display position of the application icon below the application icon of the target application and a preset movement distance;
to move downwards the application icon below the application icon of the target application to a bottom of the auxiliary display region.

In a possible implementation mode, the communication terminal is provided with one of following screens: a curved screen, the main display region includes a flat display region of the curved screen, and the auxiliary display region includes a curved display region of the curved screen; a full screen, the main display region including a middle display region of the full screen, and the auxiliary display region including a display region on at least one side of the full screen, such as a display region on the left side of the full screen, or a display region on the bottom side of the full screen; an irregularly-shaped screen, the main display region including a middle display region of the irregularly-shaped screen, and the auxiliary display region including a display region on at least one side of the irregularly-shaped screen, such as a display region on the left side of the irregularly-shaped screen, or a display region on the bottom side of the irregularly-shaped screen.

In a possible implementation mode, the auxiliary display region is positioned on two sides of the screen of the communication terminal.

In the embodiment of the disclosure, when a notification message of a preset application is obtained, the communication terminal may display the notification message and the operation option nearby the preset application in the auxiliary display region. Since the auxiliary display region is different from the main display region configured to display a task interface in the communication terminal, if a manner of displaying the notification message in the auxiliary display region is adopted, the task interface may be prevented from being covered, and a present running task of the communication terminal in the main display region may also be prevented from being disturbed.

In at least one alternative embodiment, a communication terminal for displaying a notification message is provided, comprising: at least one processor 110; and a computer readable storage 120, coupled to the at least one processor 110 and storing at least one computer executable instructions thereon, which when the at least one computer executable instructions is executed by the at least one processor 110, cause the at least one processor 110 to carry out following actions: displaying application icons of multiple preset applications in an auxiliary display region of the communication terminal; determining a target application corresponding to a notification message when the notification message is obtained; and displaying the notification message and an operation option in the auxiliary display region when the multiple preset applications comprise the target application, the auxiliary display region being a region which is different from a main display region of the communication terminal, the main display region being configured to display an interface of a present running task of the communication terminal.

According to the invention displaying the notification message and the operation option in the auxiliary display region of the communication terminal comprises: displaying the notification message and the operation option in a preset region of the auxiliary display region.

In an embodiment, displaying the notification message and the operation option in the auxiliary display region of the communication terminal comprises: displaying the notification message and the operation option at an upper layer of an interface of a preset region of the auxiliary display region.

In the present embodiment, wherein displaying the notification message and the operation option in a preset region of the auxiliary display region comprises at least one of following:
moving the application icon of the target application to a first position in the application icons of the multiple preset applications, and displaying the notification message and the operation option in a region above the application icon of the target application;
moving upwards an application icon above the application icon of the target application, and displaying the notification message and the operation option in a region between the application icon of the target application and the application icon above the application icon of the target application;
moving downwards an application icon below the application icon of the target application, and displaying the notification message and the operation option in a region between the application icon of the target application and the application icon below the application icon of the target application.

In at least one alternative embodiment, moving the application icon of the target application to the first position in the application icons of the multiple preset applications comprises: modifying a display position of the application icon of the target application into the first position in the application icons of the multiple preset applications, and correspondingly modifying display positions of other application icons in the application icons of the multiple preset applications.

In at least one alternative embodiment, correspondingly modifying the display positions of the other application icons in the application icons of the multiple preset applications comprises one of following: modifying a display position of a first icon into an original display position of an icon which is the next icon of the first icon, the first icon being an application icon, which is displayed according to a display sequence before the application icon of the target application, in the application icons of the multiple preset applications; modifying a display position of a second icon into an original display position of the application icon of the target application, the second icon being an application icon, which is displayed in a first position according to a display sequence, in the application icons of the multiple preset applications; modifying a display position of a third icon into an original display position of a icon which is the next icon of the third icon, the third icon being an application icon, which is displayed according to a display sequence after the application icon of the target application, in the application icons of the multiple preset applications, and modifying a display position of a fourth icon into an original display position of a icon which is the next second icon of the fourth icon, the fourth icon being an application icon, which is displayed according to a display sequence before the application icon of the target application, in the application icons of the multiple preset applications.

In at least one alternative embodiment, moving upwards the application icon above the application icon of the target application comprises at least one of following: moving upwards the application icon above the application icon of the target application according to a display position of the application icon above the application icon of the target application and a preset movement distance; moving upwards the application icon above the application icon of the target application to a top of the auxiliary display region.

In at least one alternative embodiment, moving downwards the application icon below the application icon of the target application comprises at least one of following: moving downwards the application icon below the application icon of the target application according to a display position of the application icon below the application icon of the target application and a preset movement distance; moving downwards the application icon below the application icon of the target application to a bottom of the auxiliary display region.

In at least one alternative embodiment, the communication terminal is provided with one of following screens: a curved screen, the main display region comprising a flat display region of the curved screen, and the auxiliary display region comprising a curved display region of the curved screen; a full screen, the main display region comprising a middle display region of the full screen, and the auxiliary display region comprising a display region on at least one side of the full screen; an irregularly-shaped screen, the main display region comprising a middle display region of the irregularly-shaped screen, and the auxiliary display region comprising a display region on at least one side of the irregularly-shaped screen.

In at least one alternative embodiment, the auxiliary display region is positioned on two sides of the screen of the communication terminal.

In another aspect of the invention, a non-transitory computer-readable storage medium is provided, on which a computer program is stored, wherein the computer program is executed by a processor 110 to carry out following actions: obtaining a notification message; and displaying the notification message and an operation option in an auxiliary display region of a communication terminal, the auxiliary display region being a region which is different from a main display region of the communication terminal, the main display region being configured to display an interface of a present running task of the communication terminal.

In an embodiment, displaying the notification message and the operation option in the auxiliary display region of the communication terminal comprises: displaying the notification message and the operation option in a preset region of the auxiliary display region.

In an alternative embodiment, displaying the notification message and the operation option in the auxiliary display region of the communication terminal comprises: displaying the notification message and the operation option at an upper layer of an interface of a preset region of the auxiliary display region.

In at least one alternative embodiment, displaying the notification message and the operation option in the preset region of the auxiliary display region comprises: determining a target application corresponding to the notification message; and displaying the notification message and the operation option in the preset region, corresponding to an application icon of the target application, of the auxiliary display region, when the application icon of the target application is displayed in the auxiliary display region.

In the present embodiment, application icons of multiple preset applications are displayed in the auxiliary display region, the application icons of the multiple preset applications comprise the application icon of the target application, and displaying the notification message and the operation option in the preset region, corresponding to the application icon of the target application, of the auxiliary display region comprises at least one of following:
moving the application icon of the target application to a first position in the application icons of the multiple preset applications, and displaying the notification message and the operation option in a region above the application icon of the target application;
moving upwards an application icon above the application icon of the target application, and displaying the notification message and the operation option in a region between the application icon of the target application and the application icon above the application icon of the target application;
moving downwards an application icon below the application icon of the target application, and displaying the notification message and the operation option in a region between the application icon of the target application and the application icon below the application icon of the target application; displaying the notification message and the operation option in a left-side region of the application icon of the target application; displaying the notification message and the operation option in a right-side region of the application icon of the target application.

In at least one alternative embodiment, moving the application icon of the target application to the first position in the application icons of the multiple preset applications comprises: modifying a display position of the application icon of the target application into the first position in the application icons of the multiple preset applications, and correspondingly modifying display positions of other application icons in the application icons of the multiple preset applications.

In at least one alternative embodiment, correspondingly modifying the display positions of the other application icons in the application icons of the multiple preset applications comprises one of following: modifying a display position of a first icon into an original display position of a icon which is the next icon of the first icon, the first icon being an application icon, which is displayed according to a display sequence before the application icon of the target application, in the application icons of the multiple preset applications; modifying a display position of a second icon into an original display position of the application icon of the target application, the second icon being an application icon, which is displayed in a first position according to a display sequence, in the application icons of the multiple preset applications; modifying a display position of a third icon into an original display position of a icon which is the next icon of the third icon, the third icon being an application icon, which is displayed according to a display sequence after the application icon of the target application, in the application icons of the multiple preset applications, and modifying a display position of a fourth icon into an original display position of a icon which is the next second icon of the fourth icon, the fourth icon being an application icon, which is displayed according to a display sequence before the application icon of the target application, in the application icons of the multiple preset applications.

In at least one alternative embodiment, moving upwards the application icon above the application icon of the target application comprises at least one of following: moving upwards the application icon above the application icon of the target application according to a display position of the application icon above the application icon of the target application and a preset movement distance; moving upwards the application icon above the application icon of the target application to a top of the auxiliary display region.

In at least one alternative embodiment, moving downwards the application icon below the application icon of the target application comprises at least one of following: moving downwards the application icon below the application icon of the target application according to a display position of the application icon below the application icon of the target application and a preset movement distance; moving downwards the application icon below the application icon of the target application to a bottom of the auxiliary display region.

In at least one alternative embodiment, the communication terminal is provided with one of following screens: a curved screen, the main display region comprising a flat display region of the curved screen, and the auxiliary display region comprising a curved display region of the curved screen; a full screen, the main display region comprising a middle display region of the full screen, and the auxiliary display region comprising a display region on at least one side of the full screen, such as a display region on the left side of the full screen, or a display region on the bottom side of the full screen; an irregularly-shaped screen, the main display region comprising a middle display region of the irregularly-shaped screen, and the auxiliary display region comprising a display region on at least one side of the irregularly-shaped screen, such as a display region on the left side of the irregularly-shaped screen, or a display region on the bottom side of the irregularly-shaped screen.

In at least one alternative embodiment, the auxiliary display region is positioned on two sides of the screen of the communication terminal.

It is important to note that, when the device for displaying the notification message provided by the embodiment displays the notification message, descriptions are made with division of each of the abovementioned functional components as an example, and during practical application, the functions may be allocated to different functional modules for realization according to a requirement, that is, an internal structure of equipment is divided into different functional components to realize all or part of the functions described above. In addition, the device for displaying the notification message provided by the embodiment belongs to the same concept with the method for displaying the notification message provided by embodiment, and details about specific implementation process of the device refer to the method embodiment and will not be elaborated herein.

In an exemplary embodiment, a computer-readable storage medium storing a computer program is further provided, for example, a memory storing a computer program, and the computer program is executed by a processor 110 to implement the method for displaying the notification message in the embodiment shown in Fig. 5 or Fig. 6. For example, the computer-readable storage medium may be a ROM, a RAM, a Compact Disc Read-Only Memory (CD-ROM), a magnetic tape, a floppy disk, optical data storage equipment and the like.

Those of ordinary skilled in the art can understand that all or part of the blocks of the embodiments may be completed by hardware and may also be completed by related hardware instructed by a program, the program may be stored in a computer-readable storage medium, and the storage medium may be a ROM, a magnetic disk, an optical disk or the like.

## Claims

1. A method for displaying a notification message, comprising:
displaying (501) application icons of multiple preset applications in an auxiliary display region of a communication terminal;
when a notification message is acquired, determining (502) a target application corresponding to the notification message; and
when the multiple preset applications comprise the target application, displaying (503) the notification message and an operation option in the auxiliary display region, the auxiliary display region being a region which is different from a main display region of the communication terminal, the main display region being configured to display an interface of a present running task of the communication terminal;
**characterized in that**
displaying (503) the notification message and the operation option in the auxiliary display region comprises: displaying the notification message and the operation option in a preset region of the auxiliary display region;
wherein displaying the notification message and the operation option in the preset region of the auxiliary display region comprises at least one of following:
moving the application icon of the target application to a first position in the application icons of the multiple preset applications, and displaying the notification message and the operation option in a region above the application icon of the target application;
moving upwards an application icon above the application icon of the target application, and displaying the notification message and the operation option in a region between the application icon of the target application and the application icon above the application icon of the target application;
moving downwards an application icon below the application icon of the target application, and displaying the notification message and the operation option in a region between the application icon of the target application and the application icon below the application icon of the target application.

2. The method as claimed in claim 1, wherein displaying (503) the notification message and the operation option in the auxiliary display region comprises:
displaying the notification message and the operation option at an upper layer of an interface of a preset region of the auxiliary display region.

3. The method as claimed in claim 1, wherein moving the application icon of the target application to the first position in the application icons of the multiple preset applications comprises:
modifying a display position of the application icon of the target application into the first position in the application icons of the multiple preset applications, and correspondingly modifying display positions of other application icons in the application icons of the multiple preset applications.

4. The method as claimed in claim 3, wherein correspondingly modifying the display positions of the other application icons in the application icons of the multiple preset applications comprises one of following:
modifying a display position of a first icon into an original display position of an icon which is the next icon of the first icon, the first icon being an application icon, which is displayed according to a display sequence before the application icon of the target application, in the application icons of the multiple preset applications;
modifying a display position of a second icon into an original display position of the application icon of the target application, the second icon being an application icon, which is displayed in a first position according to a display sequence, in the application icons of the multiple preset applications.

5. The method as claimed in claim 1, wherein moving upwards the application icon above the application icon of the target application comprises at least one of following:
moving upwards the application icon above the application icon of the target application according to a display position of the application icon above the application icon of the target application and a preset movement distance;
moving upwards the application icon above the application icon of the target application to a top of the auxiliary display region.

6. The method as claimed in claim 1, wherein moving downwards the application icon below the application icon of the target application comprises at least one of following:
moving downwards the application icon below the application icon of the target application according to a display position of the application icon below the application icon of the target application and a preset movement distance;
moving downwards the application icon below the application icon of the target application to a bottom of the auxiliary display region.

7. The method as claimed in any one of claims 1 to 6, wherein the communication terminal is provided with one of following screens:
a curved screen, the main display region comprising a flat display region of the curved screen, and the auxiliary display region comprising a curved display region of the curved screen;
a full screen, the main display region comprising a middle display region of the full screen, and the auxiliary display region comprising a display region on at least one side of the full screen;
an irregularly-shaped screen, the main display region comprising a middle display region of the irregularly-shaped screen, and the auxiliary display region comprising a display region on at least one side of the irregularly-shaped screen, wherein the irregularly-shaped screen is a touch display screen of which an apparent shape is an irregular shape.

8. The method as claimed in any one of claims 1 to 6, wherein the auxiliary display region is positioned on two sides of the screen of the communication terminal.

9. A communication terminal for displaying a notification message, comprising:
at least one processor (110); and
a computer readable storage (120), coupled to the at least one processor (110), wherein at least one computer executable instructions are stored in the computer readable storage (120), and when the at least one computer executable instructions is executed by the at least one processor (110), to cause the at least one processor (110) to carry out following actions:
displaying application icons of multiple preset applications in an auxiliary display region of the communication terminal;
determining a target application corresponding to a notification message when the notification message is obtained; and
displaying the notification message and an operation option in the auxiliary display region when the multiple preset applications comprise the target application, the auxiliary display region being a region which is different from a main display region of the communication terminal, the main display region being configured to display an interface of a present running task of the communication terminal;
**characterized in that**
displaying the notification message and the operation option in the auxiliary display region comprises: displaying the notification message and the operation option in a preset region of the auxiliary display region;
wherein displaying the notification message and the operation option in the preset region of the auxiliary display region comprises at least one of following:
moving the application icon of the target application to a first position in the application icons of the multiple preset applications, and displaying the notification message and the operation option in a region above the application icon of the target application;
moving upwards an application icon above the application icon of the target application, and displaying the notification message and the operation option in a region between the application icon of the target application and the application icon above the application icon of the target application;
moving downwards an application icon below the application icon of the target application, and displaying the notification message and the operation option in a region between the application icon of the target application and the application icon below the application icon of the target application.

10. The communication terminal as claimed in claim 9, wherein displaying the notification message and the operation option in the auxiliary display region of the communication terminal comprises:
displaying the notification message and the operation option at an upper layer of an interface of a preset region of the auxiliary display region.

11. A non-transitory computer-readable storage medium, on which a computer program is stored, wherein the computer program is executed by a processor (110) to carry out actions in the method as claimed in any one of claims 1 to 8.

## Patentansprüche

1. Verfahren zum Anzeigen einer Benachrichtigungsmeldung, Folgendes umfassend:
Anzeigen (501) von Anwendungssymbolen von mehreren vorgegebenen Anwendungen in einem Hilfsanzeigebereich eines Kommunikationsendgerätes:
wenn eine Benachrichtigungsmeldung erfasst wird, Bestimmen (502) einer Zielanwendung, die der Benachrichtigungsmeldung entspricht; und
wenn die mehreren vorgegebenen Anwendungen die Zielanwendung enthalten, Anzeigen (503) der Benachrichtigungsmeldung und einer Betriebsoption in dem Hilfsanzeigebereich, wobei der Hilfsanzeigebereich ein Bereich ist, der von einem Hauptanzeigebereich des Kommunikationsendgerätes verschieden ist, und der Hauptanzeigebereich dazu ausgelegt ist, eine Schnittstelle einer aktuell aktiven Task des Kommunikationsendgerätes anzuzeigen;
**dadurch gekennzeichnet, dass**
Anzeigen (503) der Benachrichtigungsmeldung und der Betriebsoption in dem Hilfsanzeigebereich Folgendes umfasst: Anzeigen der Benachrichtigungsmeldung und der Betriebsoption in einem vorgegebenen Bereich des Hilfsanzeigebereichs;
wobei das Anzeigen der Benachrichtigungsmeldung und der Betriebsoption in dem vorgegebenen Bereich des Hilfsanzeigebereichs mindestens einen der folgenden Posten umfasst:
Verschieben des Anwendungssymbols der Zielanwendung zu einer ersten Position in den Anwendungssymbolen der mehreren vorgegebenen Anwendungen, und Anzeigen der Benachrichtigungsmeldung und der Betriebsoption in einem Bereich über dem Anwendungssymbol der Zielanwendung;
Verschieben eines Anwendungssymbols nach oben über das Anwendungssymbol der Zielanwendung, und Anzeigen der Benachrichtigungsmeldung und der Betriebsoption in einem Bereich zwischen dem Anwendungssymbol der Zielanwendung und dem Anwendungssymbol über dem Anwendungssymbol der Zielanwendung;
Verschieben eines Anwendungssymbols nach unten unter das Anwendungssymbol der Zielanwendung, und Anzeigen der Benachrichtigungsmeldung und der Betriebsoption in einem Bereich zwischen dem Anwendungssymbol der Zielanwendung und dem Anwendungssymbol unter dem Anwendungssymbol der Zielanwendung;

2. Verfahren nach Anspruch 1, wobei das Anzeigen (503) der Benachrichtigungsmeldung und der Betriebsoption in dem Hilfsanzeigebereich Folgendes umfasst:
Anzeigen der Benachrichtigungsmeldung und der Betriebsoption an einer oberen Schicht einer Schnittstelle eines vorgegebenen Bereichs des Hilfsanzeigebereichs.

3. Verfahren nach Anspruch 1, wobei das Verschieben des Anwendungssymbols der Zielanwendung zu der ersten Position in den Anwendungssymbolen der mehreren vorgegebenen Anwendungen Folgendes umfasst:
Modifizieren einer Anzeigeposition des Anwendungssymbols der Zielanwendung zu der ersten Position in den Anwendungssymbolen der mehreren vorgegebenen Anwendungen, und dementsprechendes Modifizieren der Anzeigepositionen anderer Anwendungssymbole in den Anwendungssymbolen der mehreren vorgegebenen Anwendungen.

4. Verfahren nach Anspruch 3, wobei das entsprechende Modifizieren der Anzeigepositionen der anderen Anwendungssymbole in den Anwendungssymbolen der mehreren vorgegebenen Anwendungen einen der folgenden Posten umfasst:
Modifizieren einer Anzeigeposition eines ersten Symbols zu einer ursprünglichen Anzeigeposition eines Symbols, welches das nächste Symbol des ersten Symbols ist, wobei das erste Symbol ein Anwendungssymbol ist, das gemäß einer Anzeigesequenz vor dem Anwendungssymbol der Zielanwendung in den Anwendungssymbolen der mehreren vorgegebenen Anwendungen angezeigt wird;
Modifizieren einer Anzeigeposition eines zweiten Symbols zu einer ursprünglichen Anzeigeposition des Anwendungssymbols der Zielanwendung, wobei das zweite Symbol ein Anwendungssymbol ist, das gemäß einer Anzeigesequenz in den Anwendungssymbolen der mehreren vorgegebenen Anwendungen in einer ersten Position angezeigt wird.

5. Verfahren nach Anspruch 1, wobei das Verschieben des Anwendungssymbols nach oben über das Anwendungssymbol der Zielanwendung mindestens einen der folgenden Posten umfasst:
Verschieben des Anwendungssymbols nach oben über das Anwendungssymbol der Zielanwendung gemäß einer Anzeigeposition des Anwendungssymbols über dem Anwendungssymbol der Zielanwendung und einer vorgegebenen Verschiebungsstrecke;
Verschieben des Anwendungssymbols nach oben über das Anwendungssymbol der Zielanwendung zu einem oberen Ende des Hilfsanzeigebereichs.

6. Verfahren nach Anspruch 1, wobei das Verschieben des Anwendungssymbols nach unten unter das Anwendungssymbol der Zielanwendung mindestens einen der folgenden Posten umfasst:
Verschieben des Anwendungssymbols nach unten unter das Anwendungssymbol der Zielanwendung gemäß einer Anzeigeposition des Anwendungssymbols unter dem Anwendungssymbol der Zielanwendung und einer vorgegebenen Verschiebungsstrecke;
Verschieben des Anwendungssymbols nach unten unter das Anwendungssymbol der Zielanwendung zu einem unteren Ende des Hilfsanzeigebereichs.

7. Verfahren nach einem der Ansprüche 1 bis 6, wobei das Kommunikationsendgerät mit einem der folgenden Bildschirme versehen ist:
einem gebogenen Bildschirm, wobei der Hauptanzeigebereich einen flachen Anzeigebereich des gebogenen Bildschirms umfasst, und der Hilfsanzeigebereich einen gebogenen Anzeigebereich des gebogenen Bildschirms umfasst;
einen vollen Bildschirm, wobei der Hauptanzeigebereich einen mittleren Anzeigebereich des vollen Bildschirms umfasst, und der Hilfsanzeigebereich einen Anzeigebereich auf mindestens einer Seite des vollen Bildschirms umfasst;
einen unregelmäßig geformten Bildschirm, wobei der Hauptanzeigebereich einen mittleren Anzeigebereich des unregelmäßig geformten Bildschirms umfasst, und der Hilfsanzeigebereich einen Anzeigebereich auf mindestens einer Seite des unregelmäßig geformten Bildschirms umfasst, wobei der unregelmäßig geformte Bildschirm ein Touchdisplay-Bildschirm ist, dessen offensichtliche Form eine unregelmäßige Form ist.

8. Verfahren nach einem der Ansprüche 1 bis 6, wobei der Hilfsanzeigebereich auf zwei Seiten des Bildschirms des Kommunikationsendgerätes positioniert ist.

9. Kommunikationsendgerät zum Anzeigen einer Benachrichtigungsmeldung, Folgendes umfassend:
mindestens einen Prozessor (110); und
einen computerlesbaren Massenspeicher (120), der mit dem mindestens einen Prozessor (110) gekoppelt ist, wobei mindestens eine computerausführbare Anweisung in dem computerlesbaren Massenspeicher (120) gespeichert ist, und wenn die mindestens eine computerausführbare Anweisung durch den mindestens einen Prozessor (110) ausgeführt wird, um den mindestens einen Prozessor (110) zu veranlassen, die folgenden Aktionen auszuführen:
Anzeigen von Anwendungssymbolen von mehreren vorgegebenen Anwendungen in einem Hilfsanzeigebereich des Kommunikationsendgerätes;
Bestimmen einer Zielanwendung, die einer Benachrichtigungsmeldung entspricht, wenn die Benachrichtigungsmeldung erhalten wird; und
Anzeigen der Benachrichtigungsmeldung und einer Betriebsoption in dem Hilfsanzeigebereich, wenn die mehreren vorgegebenen Anwendungen die Zielanwendung enthalten, wobei der Hilfsanzeigebereich ein Bereich ist, der von einem Hauptanzeigebereich des Kommunikationsendgerätes verschieden ist, und der Hauptanzeigebereich dazu ausgelegt ist, eine Schnittstelle einer aktuell aktiven Task des Kommunikationsendgerätes anzuzeigen;
**dadurch gekennzeichnet, dass**
das Anzeigen der Benachrichtigungsmeldung und der Betriebsoption in dem Hilfsanzeigebereich Folgendes umfasst: Anzeigen der Benachrichtigungsmeldung und der Betriebsoption in einem vorgegebenen Bereich des Hilfsanzeigebereichs;
wobei das Anzeigen der Benachrichtigungsmeldung und der Betriebsoption in dem vorgegebenen Bereich des Hilfsanzeigebereichs mindestens einen der folgenden Posten umfasst:
Verschieben des Anwendungssymbols der Zielanwendung zu einer ersten Position in den Anwendungssymbolen der mehreren vorgegebenen Anwendungen, und Anzeigen der Benachrichtigungsmeldung und der Betriebsoption in einem Bereich über dem Anwendungssymbol der Zielanwendung;
Verschieben eines Anwendungssymbols nach oben über das Anwendungssymbol der Zielanwendung, und Anzeigen der Benachrichtigungsmeldung und der Betriebsoption in einem Bereich zwischen dem Anwendungssymbol der Zielanwendung und dem Anwendungssymbol über dem Anwendungssymbol der Zielanwendung;
Verschieben eines Anwendungssymbols nach unten unter das Anwendungssymbol der Zielanwendung, und Anzeigen der Benachrichtigungsmeldung und der Betriebsoption in einem Bereich zwischen dem Anwendungssymbol der Zielanwendung und dem Anwendungssymbol unter dem Anwendungssymbol der Zielanwendung;

10. Kommunikationsendgerät nach Anspruch 9, wobei das Anzeigen der Benachrichtigungsmeldung und der Betriebsoption in dem Hilfsanzeigebereich des Kommunikationsendgerätes Folgendes umfasst:
Anzeigen der Benachrichtigungsmeldung und der Betriebsoption an einer oberen Schicht einer Schnittstelle eines vorgegebenen Bereichs des Hilfsanzeigebereichs.

11. Nichtflüchtiges computerlesbares Speichermedium, auf dem ein Computerprogramm gespeichert ist, wobei das Computerprogramm durch einen Prozessor (110) ausgeführt wird, um Aktionen in dem Verfahren nach einem der Ansprüche 1 bis 8 auszuführen.

## Revendications

1. Procédé d'affichage d'un message de notification, comprenant :
l'affichage (501) d'icônes d'application de multiples applications prédéfinies dans une région d'affichage auxiliaire d'un terminal de communication ;
lorsqu'un message de notification est acquis, la détermination (502) d'une application cible correspondant au message de notification ; et
lorsque les multiples applications prédéfinies comprennent l'application cible, l'affichage (503) du message de notification et d'une option d'opération dans la région d'affichage auxiliaire, la région d'affichage auxiliaire étant une région qui est différente d'une région d'affichage principale du terminal de communication, la région d'affichage principale étant configurée pour afficher une interface d'une tâche en cours d'exécution du terminal de communication ;
**caractérisé en ce que**
l'affichage (503) du message de notification et de l'option d'opération dans la région d'affichage auxiliaire comprend : l'affichage du message de notification et de l'option d'opération dans une région prédéfinie de la région d'affichage auxiliaire ; l'affichage du message de notification et de l'option d'opération dans la région prédéfinie de la région d'affichage auxiliaire comprend au moins l'une des actions suivantes :
le déplacement de l'icône d'application de l'application cible vers une première position parmi les icônes d'application des multiples applications prédéfinies, et l'affichage du message de notification et de l'option d'opération dans une région au-dessus de l'icône d'application de l'application cible ;
le déplacement vers le haut d'une icône d'application au-dessus de l'icône d'application cible, et l'affichage du message de notification et de l'option d'opération dans une région comprise entre l'icône d'application de l'application cible et l'icône d'application au-dessus de l'icône d'application de l'application cible ;
le déplacement vers le bas d'une icône d'application au-dessous de l'icône d'application cible, et l'affichage du message de notification et de l'option d'opération dans une région comprise entre l'icône d'application de l'application cible et l'icône d'application au-dessous de l'icône d'application de l'application cible.

2. Procédé selon la revendication 1, dans lequel l'affichage (503) du message de notification et de l'option d'opération dans la région d'affichage auxiliaire comprend :
l'affichage du message de notification et de l'option d'opération sur une couche supérieure d'une interface d'une région prédéfinie de la région d'affichage auxiliaire.

3. Procédé selon la revendication 1, dans lequel le déplacement de l'icône d'application de l'application cible vers la première position parmi les icônes d'application des multiples applications prédéfinies comprend :
la modification d'une position d'affichage de l'icône d'application de l'application cible à la première position parmi les icônes d'application des multiples applications prédéfinies, et la modification correspondante des positions d'affichage d'autres icônes d'application parmi les icônes d'application des multiples applications prédéfinies.

4. Procédé selon la revendication 3, dans lequel la modification correspondante des positions d'affichage des autres icônes d'application parmi les icônes d'application des multiples applications prédéfinies comprend l'une des actions suivantes :
la modification d'une position d'affichage d'une première icône à une position d'affichage originale d'une icône qui est l'icône suivant la première icône, la première icône étant une icône d'application, qui est affichée conformément à une séquence d'affichage avant l'icône d'application de l'application cible, parmi les icônes d'application des multiples applications prédéfinies ;
la modification d'une position d'affichage d'une seconde icône à une position d'affichage originale de l'icône d'application de l'application cible, la seconde icône étant une icône d'application, qui est affichée dans une première position conformément à une séquence d'affichage, parmi les icônes d'application des multiples applications prédéfinies.

5. Procédé selon la revendication 1, dans lequel le déplacement vers le haut de l'icône d'application au-dessus de l'icône d'application de l'application cible comprend au moins l'une des actions suivantes :
le déplacement vers le haut de l'icône d'application au-dessus de l'icône d'application de l'application cible conformément à une position d'affichage de l'icône d'application au-dessus de l'icône d'application de l'application cible et à une distance de déplacement prédéfinie ;
le déplacement vers le haut de l'icône d'application au-dessus de l'icône d'application de l'application cible vers le haut de la région d'affichage auxiliaire.

6. Procédé selon la revendication 1, dans lequel le déplacement vers le bas de l'icône d'application au-dessous de l'icône d'application de l'application cible comprend au moins l'une des actions suivantes :
le déplacement vers le bas de l'icône d'application au-dessous de l'icône d'application de l'application cible conformément à une position d'affichage de l'icône d'application au-dessous de l'icône d'application de l'application cible et à une distance de déplacement prédéfinie ;
le déplacement vers le bas de l'icône d'application au-dessous de l'icône d'application de l'application cible vers le bas de la région d'affichage auxiliaire.

7. Procédé selon l'une quelconque des revendications 1 à 6, dans lequel le terminal de communication est équipé de l'un des écrans suivants :
un écran incurvé, la région d'affichage principale comprenant une région d'affichage plate de l'écran incurvé, et la région d'affichage auxiliaire comprenant une région d'affichage incurvée de l'écran incurvé ;
un écran plein, la région d'affichage principale comprenant une région d'affichage médiane de l'écran plein, et la région d'affichage auxiliaire comprenant une région d'affichage sur au moins un côté de l'écran plein ;
un écran de forme irrégulière, la région d'affichage principale comprenant une région d'affichage médiane de l'écran de forme irrégulière, et la région d'affichage auxiliaire comprenant une région d'affichage sur au moins un côté de l'écran de forme irrégulière, dans lequel l'écran de forme irrégulière est un écran d'affichage tactile dont une forme apparente est une forme irrégulière.

8. Procédé selon l'une quelconque des revendications 1 à 6, dans lequel la région d'affichage auxiliaire est positionnée sur deux côtés de l'écran du terminal de communication.

9. Terminal de commutation destiné à afficher un message de notification, comprenant :
au moins un processeur (110) ; et
une mémoire lisible par ordinateur (120) couplée à l'au moins un processeur (110), dans lequel au moins un jeu d'instructions exécutables par ordinateur est stocké dans la mémoire lisible par ordinateur (120), et l'au moins un jeu d'instructions exécutables par ordinateur est exécuté par l'au moins un processeur (110) pour amener l'au moins un processeur (110) à exécuter les actions suivantes :
l'affichage d'icônes d'application de multiples applications prédéfinies dans une région d'affichage auxiliaire d'un terminal de communication ;
la détermination d'une application cible correspondant à un message de notification lorsque le message de notification est obtenu ; et
l'affichage du message de notification et d'une option d'opération dans la région d'affichage auxiliaire lorsque les multiples applications prédéfinies comprennent l'application cible, la région d'affichage auxiliaire étant une région qui est différente d'une région d'affichage principale du terminal de communication, la région d'affichage principale étant configurée pour afficher une interface d'une tâche en cours d'exécution du terminal de communication ;
**caractérisé en ce que**
l'affichage du message de notification et de l'option d'opération dans la région d'affichage auxiliaire comprend : l'affichage du message de notification et de l'option d'opération dans une région prédéfinie de la région d'affichage auxiliaire ;
dans lequel l'affichage du message de notification et de l'option d'opération dans la région prédéfinie de la région d'affichage auxiliaire comprend au moins l'une des actions suivantes :
le déplacement de l'icône d'application de l'application cible vers une première position parmi les icônes d'application des multiples applications prédéfinies, et l'affichage du message de notification et de l'option d'opération dans une région au-dessus de l'icône d'application de l'application cible ;
le déplacement vers le haut d'une icône d'application au-dessus de l'icône d'application cible, et l'affichage du message de notification et de l'option d'opération dans une région comprise entre l'icône d'application de l'application cible et l'icône d'application au-dessus de l'icône d'application de l'application cible ;
le déplacement vers le bas d'une icône d'application au-dessous de l'icône d'application cible, et l'affichage du message de notification et de l'option d'opération dans une région comprise entre l'icône d'application de l'application cible et l'icône d'application au-dessous de l'icône d'application de l'application cible.

10. Terminal de communication selon la revendication 9, dans lequel l'affichage du message de notification et de l'option d'opération dans la région d'affichage auxiliaire du terminal de communication comprend :
l'affichage du message de notification et de l'option d'opération sur une couche supérieure d'une interface d'une région prédéfinie de la région d'affichage auxiliaire.

11. Support de stockage lisible par ordinateur non transitoire, sur lequel un programme informatique est stocké, dans lequel le programme informatique est exécuté par un processeur (110) pour exécuter les actions du procédé selon l'une quelconque des revendications 1 à 8.
